# EUROPÄISCHE PATENTSCHRIFT

(11) **EP 3 237 707 B1**
(45) Veröffentlichungstag und Bekanntmachung des Hinweises auf die Patenterteilung: **19.06.2019**
(21) Anmeldenummer: 15817390.6
(22) Anmeldetag: 23.12.2015
(51) Int. Cl.: E04H 5/02, E04H 9/02, E04B 1/348, E04B 1/98, E04B 1/343, E04C 3/34, E04B 1/35, F16F 15/04, E04B 1/41

(54) **MODULARE ANLAGE UND MONTAGESET FÜR DEN AUFBAU EINER MODULAREN ANLAGE**
MODULAR INSTALLATION AND ASSEMBLY SET FOR A MODULAR INSTALLATION
INSTALLATION MODULAIRE ET SET DE MONTAGE POUR UNE INSTALLATION MODULAIRE

(30) Priorität: 24.12.2014 EP 14200301
(43) Veröffentlichungstag der Anmeldung: 01.11.2017
(73) Patentinhaber: RV Lizenz AG, 6330 Cham (CH)
(72) Erfinder: RÜDLINGER, Mikael, 6330 Cham (CH)
(74) Vertreter: IPrime Rentsch Kaelin AG
(86) Internationale Anmeldenummer: PCT/EP2015/081223
(87) Internationale Veröffentlichungsnummer: WO 2016/102703

(56) Entgegenhaltungen:
- WO-A1-2004/094752
- WO-A1-2010/031129
- WO-A1-2014/074508
- WO-A2-2008/027234
- GB-A- 1 244 356

## Beschreibung

### Gebiet der Technik

Die Erfindung betrifft modulare Anlagen, insbesondere modulare Industrieanlagen, Versorgungsanlagen, Produktionsanlagen etc. Die Erfindung betrifft weiter Module für solche Anlagen, sowie Montagesets für den Aufbau modularer Anlagen, gemäss den Oberbegriffen der unabhängigen Ansprüche.

### Technologischer Hintergrund

Für bestimmte Anlagen, insbesondere Industrieanlagen, Versorgungsanlagen, Produktionsanlagen, etc. kann es wünschenswert sein, diese modular aufzubauen, um beispielsweise eine schnelle und effiziente Anpassung an neue Anforderungen zu ermöglichen. Dies kann beispielsweise bei chemischen Produktionsanlagen der Fall sein, wenn eine Änderung des zu produzierenden Produkts eine Anpassung bzw. einen Austausch der einzelnen Komponenten notwendig macht. Solche grosschemische Anlagen erfordern häufig die Anordnung einer grösseren Anzahl von Anlagenmodulen in mehreren übereinanderliegenden Montageebenen. Dazu sind im Stand der Technik mehrere Arten offener Gerüststrukturen und auch geschlossener Gebäude bekannt.

Bei Industrieanlagen werden häufig Anlagenelemente eingesetzt, welche Schwingungen verursachen, beispielsweise Motoren, Turbinen, etc. Industrieanlagen müssen deshalb möglichst so aufgebaut sein, dass sich solche Schwingungen nicht in der Gesamtkonstruktion ausbreiten oder gar aufschaukeln können.

Grosse Industrieanlagen, insbesondere chemische Fabrikationsanlagen oder Erdölraffinerien, sind besonders gefährdet bei Naturkatastrophen wie Erdbeben oder Stürmen. In Regionen mit einem erhöhten Risiko für solche Katastrophen, oder in besonders gefährdeten Gebieten, beispielsweise in dicht besiedelten Gebieten, müssen solche Anlagen derart konstruiert sein, dass sie selbst extremen äusseren Einflüssen standhalten können. Die räumlichen Dimensionen wie auch der häufig vorhandene modulare Aufbau solcher Anlagen erschweren stark die Erfüllung dieser Anforderung. Ebenso variieren Anzahl, Arten, Grössen und Gewichte der einzelnen Anlagenmodule (Komponenten) meist stark von Anlage zu Anlage. Ebenso können sich die Eigenschaften einer Anlage während deren Lebensdauer stark verändern, etwa weil die Auslastung der Anlage schwankt oder weil die Anlage umgebaut wird und Anlagenmodule ersetzt, entfernt oder hinzugefügt werden. Muss die Trägerstruktur einer solchen Anlage den neuen Umständen angepasst werden, sind häufig teure Änderungen in deren meist komplexen Architektur notwendig, basierend auf aufwendigen und kostspieligen dynamischen strukturmechanische Analysen.

Ebenfalls vorteilhaft ist ein modularer Aufbau bei Industrieanlagen, bei welchen diese in effizienter Weise zerlegt und transportfähig gemacht werden muss, um beispielsweise an einen entlegenen Standort transportiert und wieder aufgebaut zu werden. Mögliche Anwendungen sind hier beispielsweise Kraftwerke, Verarbeitungsanlagen, Steueranlagen, etc., welche im Bergbau benötigt werden, wobei jedoch der Stand evtl. nach ein paar Jahren geändert werden muss.

EP 0572814 A1 zeigt eine chemische Anlage, die einen mehrgeschossigen Baukörper mit verschiedenen Bausegmenten mit übereinander liegenden Räumen aufweist. In diesen Räumen sind auf mobilen Gestellen die Anlagenkomponenten mit den dazugehörigen Anschlüssen untergebracht. Die Anlagenkomponenten können auf den Gestellen rasch seitlich aus den Räumen entnommen und ausgetauscht werden. Die Grundstruktur hingegen ist fix, und kann nicht auf einfache Weise modifiziert oder ausgetauscht werden.

Modulare Systeme sollten vorteilhaft aus relativ kleinvolumigen Einzelteilen bestehen, um diese effizient transportieren zu können. Der Aufbau und Abbau wiederum sollte ohne grossen konstruktiven Aufwand möglich sein.

Es ist bekannt, Einzelmodule in der Grösse von Standard-Frachtcontainern zusammenzusetzen, beispielsweise für die Errichtung temporärer Gebäude für Grossbaustellen. Solche modulare Systeme sind wegen der Standardformate der Module einfach zu transportieren, und können wie normale Frachtcontainer nebeneinander und übereinander gestapelt werden. Jedoch sind solche Aufbauten nur beschränkt stabil, und insbesondere ungeschützt gegen starke mechanische Belastungen, wie sie beispielsweise bei Erdbeben auftreten.

Aus dem Stand der Technik sind weiter Systeme bekannt zum Bau von Gebäuden, die gegen Naturkatastrophen wie Erdbeben und Stürme speziell geschützt sind.

US 6151844 beschreibt Strukturen zur Erstellung von ein- oder mehrstöckigen Gebäuden mit durch Zugstangen in vertikaler Richtung vorgespannten Wandelementen. Durch die Vorspannung der Wandelemente werden diese gegen äussere Windeinwirkungen und Erdbeben stabilisiert.

WO 2005/121464 A1 beschreibt Rahmenstrukturen für erdbebensichere modulare Gebäude, bei welchen die Träger in Verbindungsknoten zusammenkommen, so dass Kräfte von den Trägern konzentrisch zu diesen Knoten übertragen werden.

WO 95/30814 A1 beschreibt schwingungsgedämpfte und erdbebensichere Gebäude, bestehend aus einem verformbaren vertikalen Kerngebäude, und einer dieses umgebenden äusseren Struktur, die mittels Energie absorbierender Dämpfelemente verbunden sind. Die äussere Struktur besteht aus einem unteren Teil, der gegen den Untergrund hin schwingungsgedämpft gelagert ist, und einem darauf gelagerten oberen Teil.

US 4766708 beschreibt ein modulares System für schwingungsgedämpfte Baustrukturen. Das System weist eine Rahmenstruktur mit im Wesentlichen rechteckigen Aufnahmebereichen auf, in welchen modulare Einheiten eingefügt werden können. Die Aufnahmebereiche verfügen jeweils über schwingungsisolierende Elemente.

WO 2014/074508 A1 beschreibt ein System zur Verbindung modularer Einheiten, bei welchem jeweils acht an den Ecken zusammentreffende gestapelte quaderförmige Module mit Hilfe einer Platte verbunden werden. Die Verbindungsplatte wird mit den Dachträgern von vier an den Ecken zusammenstossenden Modulen einer unteren Lage verschraubt. Vier Module einer oberen Lage werden mit ihren Bodenträgern auf die Verbindungsplatte gestellt, wobei mit ringförmigen Zapfen eine korrekte Ausrichtung der Module sichergestellt ist. Durch Zugstangen innerhalb von Tragsäulen an den senkrechten Kanten der Module werden jeweils zwei übereinander liegende Verbindungselemente miteinander verspannt. Es resultiert eine form- und kraftschlüssige Verbindung aller acht aneinander stossenden Module an Ihren Ecken. Diese einzelnen Verbindungspunkte sind untereinander mechanisch isoliert, im Sinne davon dass sie lediglich indirekt über die Module miteinander verbunden sind.

GB 1244356 offenbart ein weiteres System zum modularen Aufbau von Gebäuden aus einer Mehrzahl von quaderförmigen Modulen. Die Module bestehen aus vier senkrechten Tragsäulen in Form eines Hohlprofils, die an zwei gegenüber liegenden Seitenflächen an den Kanten mit Querstreben verbunden sind, und an den anderen zwei gegenüber liegenden Seitenflächen über Seitenwände in Form von korrugierten Blechen. Oben wird das Modul durch eine Deckenplatte abgeschlossen, und unten durch eine Bodenplatte. An den Ecken werden jeweils die Tragsäulen der acht aneinander stossenden Module durch ein Verbindungselement in der Waagrechten formschlüssig miteinander verbunden. In den Tragsäulen sind Zugstangen angeordnet, mit welchen die gefluchteten Tragsäulen aller übereinander liegenden Module miteinander verspannt werden. Es resultiert eine form- und kraftschlüssige Verbindung der aneinander stossenden Module an Ihren Ecken. Auch hier sind die Verbindungspunkte untereinander mechanisch isoliert.

WO 2010/031 129 A1 zeigt ein anderes System zum modularen Aufbau von Gebäuden aus einer Mehrzahl von Modulen. An den quaderförmigen Modulen sind an zwei entgegengensetzen Seitenwänden in Längsrichtung an der Aussenfläche jeweils zwei senkrechte Tragsäulen angeordnet. Diese sind leicht versetzt angeordnet, so dass die Tragsäulen zweier seitlich aneinander liegender Module in Längsrichtung bündig aneinander liegen. Durch Verschrauben dieser Tragsäulen erfolgt eine Fixierung der entsprechenden zwei Module zueinander. Die Verbindung benachbarter Module in Längsrichtung erfolgt analog. Die Tragsäulen übereinander liegender Module sind gefluchtet angeordnet, wobei Zentrierelemente eine korrekte Ausrichtung gewährleisten. Die gefluchteten Tragsäulen werden ebenfalls jeweils paarweise miteinander verschraubt. Es resultieren Verbindungspunkte, an welchen jeweils vier an den Kanten aneinander liegende Module formschlüssig verbunden sind. An jeder Kante sind dabei ein oder zwei solcher Verbindungspunkte vorgesehen. Diese einzelnen Verbindungspunkte sind untereinander mechanisch isoliert.

WO 2004/094752 A1 offenbart noch ein System zum modularen Aufbau von Gebäuden. Zwischen übereinanderliegenden Tragsäulen von Modulen sind Verbindungselemente angeordnet, mit einem äusseren Flansch und einem oberen und einem unteren Stumpfkegel, die verschiedene Steigungswinkel aufweisen. Gefluchtet zu den Stumpfkegeln und dem Flansch ist ein Durchloch angeordnet. Im montierten Zustand liegt der Flansch eines Verbindungsmoduls auf der Tragsäule des darunter liegenden Moduls auf, und die Tragsäule des darüber liegenden Moduls liegt auf dem Flansch des Verbindungselements auf. Die Stumpfkegel des Verbindungselements sind in entsprechenden kegelförmigen Vertiefungen der Tragsäulen angeordnet. Senkrecht ist durch alle übereinander liegenden Tragsäulen und Verbindungselemente eine durchgehende Zugstange angeordnet, mit welcher die Module sin senkrechter Richtung miteinander verspannt werden. Bei einer seitlichen Verschiebung der Module ist vorgesehen, dass nach einer gewissen Verschiebungsdistanz die schräge Kegelwand des Verbindungselements auf der schrägen Kegelwand der Aufnahmeöffnung der Tragsäule aufliegt, so dass eine weitere seitliche Verschiebung auch zu einer Verschiebung in der Senkrechten führt, entgegen der Federkraft der Zugstange, die so als Schockabsorber wirkt. Es sind weiter Verbindungselemente mit zwei benachbarten Stumpfkegelelemente vorgesehen, mit denen zwei seitlich benachbarte Module an den Ecken miteinander verbunden werden können. Auch hier sind die einzelnen Verbindungspunkte der Module der Gesamtstruktur untereinander mechanisch isoliert.

Keines dieser Systeme ermöglicht die Realisierung von modularen Industrieanlagen, die flexibel ausgestaltet werden können, effizient aufgebaut und auch effizient abgebaut werden können, deren Module einfach transportiert werden können, und gleichzeitig sicher sind gegenüber extremen mechanischen Belastungen wie Erdbeben oder Stürmen.

Es besteht deshalb das allgemeine Bedürfnis nach Fortschritten in diesem Bereich.

WO 2008/027234 A2 zeigt ein Konstruktionssystem zum Errichten von Gebäudestrukturen umfassen eine Vielzahl vorgefertigter verbindbarer modularer Baueinheiten, wobei jede Einheit einen quaderförmigen Rahmen mit mehreren Knoten umfasst. Jeder Knoten ist an einer Ecke des Rahmens angeordnet, zur selektiven Verbindung mit anderen Einheiten mittels Führungspins, welche zwei benachbarte Konten verbinden. Die Knoten und die Aussenabmessungen des Rahmens entsprechen den ISO-Containerstandards, so dass jede Einheit unter Verwendung des intermodalen ISO-Transportsystems transportierbar ist. Wenn die Einheiten horizontal und vertikal aneinandergefügt miteinander verbunden sind, bildet sich eine Gebäudestruktur.

### Aufgabe der Erfindung

Aufgabe der Erfindung ist es, Modulare Anlagen der eingangs erwähnten Art zur Verfügung zu stellen, welche die oben erwähnten und andere Nachteile nicht aufweisen.

Eine erfindungsgemässe modulare Anlage sollte vorteilhaft die flexible Planung und Gestaltung der Anlage erlauben. Die genannten modularen Anlagen sollen effizient aufgebaut und abgebaut werden können. Gleichzeitig soll die modulare Anlage sicher sein gegenüber extremen mechanischen Belastungen wie Erdbeben oder Stürmen, aber auch allgemeinen Witterungseinflüssen.

Die einzelnen Module der Anlage sind vorteilhaft einfach transportierbar. Die Grundstruktur der einzelnen Anlagenmodule soll kostengünstig herstellbar sein.

Eine andere Aufgabe der Erfindung ist es, Montagesets für den Aufbau modularer Anlagen bereit zu stellen, welche den Aufbau solcher Anlagen aus einzelnen Modulen erlaubt.

Diese und andere Aufgaben werden gelöst durch eine erfindungsgemässe modulare Anlage, erfindungsgemässe Module für modulare Anlagen, sowie erfindungsgemässe Montagesets zum Aufbau modularer Anlagen, gemäss den unabhängigen Ansprüchen. Weitere bevorzugte Ausführungsformen sind in den abhängigen Ansprüchen gegeben.

### Darstellung der Erfindung

Im Rahmen dieser Offenbarung bezieht sich der Begriff "modulare Anlage" unter anderem auf Industrieanlagen, die aus einzelnen Modulen bestehen, beispielsweise chemische Produktionsanlagen, bei denen typischerweise verschiedene Komponenten (z.B. Reaktoren, Tanks, Filter, Pumpen, Wärmetauscher, etc.) miteinander operativ verbunden sind, beispielsweise über Leitungen, etc.

Solche Industrieanlagen können auch andere Verarbeitungsanlagen umfassen, beispielsweise Vorrichtungen zum Zerkleinern, Waschen, Sortieren oder Transportieren von Gestein, beispielsweise im Bergbau. Auch Kraftwerke können modular aufgebaut werden. Aus der WO 2011/061 299 A1 der Anmelderin ist zum Beispiel eine Anlage zur Verwertung von kohlenstoffhaltigen Materialien und zur Erzeugung von Energie bekannt. Auch eine solche Anlage lässt sich als modulare Anlage realisieren.

Dem Fachmann ist klar, dass vom Begriff "modulare Anlage" im Wesentlichen alle technischen oder industriellen Anlagen und Einrichtungen umfasst werden, die aus einzelnen Modulen bestehen bzw. bestehen können, insbesondere chemische Produktionsanlagen, Kraftwerkanlagen, Versorgungsanlagen, Reinigungsanlagen, Verarbeitungsanlagen etc., jedoch auch andere Anlagen wie Lagersysteme, Parkhäuser, und modulare Gebäude, die aus einzelnen Modulen aufgebaut werden können.

In einem ersten Aspekt der Erfindung einer erfindungsgemässen modularen Anlage, insbesondere einer modularen Industrieanlage, mit mehreren quaderförmigen Anlagemodulen, die in zwei oder mehr Lagen übereinander gestapelt angeordnet sind,
- weisen die Module eine Tragstruktur mit Befestigungspunkten) auf, wobei die Befestigungspunkte vorgesehen sind zu Verbindung eines Moduls mit entsprechenden Befestigungspunkten der angrenzenden Module einer darüber und/oder darunter liegenden Lage;
- sind die Module einer Lage mit den angrenzenden Modulen der darüber und/oder darunter liegenden Lage in der horizontalen Ebene formschlüssig verbunden;
- ist mindestens eine Zugkraftvorrichtung mit einem Zugelement vorgesehen, mit der entlang der Senkrechten eine unterste Lage von Modulen bzw. ein Fundamentblock gegenüber einer obersten Lage von Modulen mit einer Zugkraft beaufschlagt werden kann, so dass die Module zwischen der genannten untersten Lage und der genannten obersten Lage mit den angrenzenden Modulen der darüber und/oder darunter liegenden Lage entlang der Senkrechten an den Befestigungspunkten kraftschlüssig aneinandergedrückt und so fixiert werden;
- sind auf einer Oberseite der Tragstruktur der Module drei oder mehr Lagerelemente angeordnet, die eine erste Ebene definieren, und sind auf einer der Oberseite abgewandten Unterseite der Tragstruktur drei oder mehr Lagerelemente angeordnet, die eine zur ersten Ebene parallele zweite Ebene definieren; wobei die Lagerelemente als Befestigungspunkte der Module dienen;
- bilden jeweils ein Lagerelement auf der Oberseite und ein Lagerelement auf der Unterseite ein Paar, und sind gefluchtet zueinander entlang einer zur Normalen der Ebenen parallelen Geraden angeordnet;
- weisen die genannten Lagerelemente eine konische Ausnehmung auf; und
- sind zwei einander zugewandte Lagerelemente zweier aneinandergrenzender Module benachbarter Lagen durch ein Verbindungselement verbunden, wobei das Verbindungselement die Form eines Doppelkegels oder eines Doppelkegelstumpfs aufweist, und jeweils ein Kegel bzw. Kegelstumpf des Verbindungselements in der konischen Aufnahme eines der zwei Lagerelemente angeordnet ist und direkt bündig auf dieser aufliegt.

Vorteilhaft sind die Kegelmantelflächen der Verbindungselemente und die Kegelmantelflächen der Aufnahmen der Lagerelemente derart geformt, dass ein Kegel bzw. Kegelstumpf eines Verbindungselements bündig in der konischen Aufnahme eines Lagerelements aufliegen kann, ohne dass ein Teil des dazugehörigen Moduls auf einer Oberfläche des Verbindungelements aufliegt, die nicht zur Mantelfläche des genannten Kegels bzw. Kegelstumpfs gehört, insbesondere nicht auf einer zur Längsachse des Doppelkegels oder Doppelkegelstumpfs senkrechten Oberfläche des Verbindungelements.

Zwischen zwei gepaarten Lagerelementen eines Moduls kann jeweils eine Tragsäule angeordnet sein. Diese nimmt die statischen Kräfte entlang der Senkrechten auf.

Die Zugkraftvorrichtung umfasst vorteilhaft einen Anker für das Zugelement in einem Modul der untersten Lage, und eine Spannvorrichtung, mit welcher das Zugelement gespannt werden kann, und/oder die Zugspannung aufrecht erhalten werden kann. Das Zugelement kann beispielsweise als eine einzige oder mehrere parallele Zugstangen ausgeführt sein, oder als ein einzelnes oder mehrere parallele Zugseile. Besonders vorteilhaft weist die Zugkraftvorrichtung ein Federelement auf, welches Längenänderungen des Zugelements aufgrund äusserer Faktoren, beispielsweise Temperaturänderungen, in einem bestimmten Mass ausgleichen kann.

In einer vorteilhaften Variante einer vorbesprochenen erfindungsgemässen Anlage sind wechselweise Lagen mit einem Träger-Modul und einem oder mehreren Funktionsmodulen übereinander angeordnet.

In einer weiteren vorteilhaften Variante einer vorbesprochenen erfindungsgemässen Anlage sind die Module derart angeordnet, dass bei mindestens einer Lage von Modulen die Befestigungspunkte von zwei oder mehr Modulen der genannten Lage mit Befestigungspunkten eines gemeinsamen Moduls einer darüber liegenden und/oder einer darunter liegenden Lage verbunden sind. Dies führt dazu, dass benachbarte Module einer Lage über das gemeinsam verbundene Modul einer anderen Lage mechanisch verbunden sind, was bei der gesamten Anlage zu einer Versteifung führt.

In einer anderen vorteilhaften Variante einer vorbesprochenen erfindungsgemässen Anlage sind die Module derart verschränkt angeordnet und gestapelt, dass zumindest ein Teil der Module ein dreidimensionales Gitter bilden. Auch dieses Merkmal führt zur mechanischen Versteifung der gesamten Anlage.

Die derart gesamthaft mechanisch stabilisierte modulare Anlage kann aufgrund ihrer grossen Steifheit nur in einem sehr geringen Ausmass schwingen, so dass durch einzelne Anlageteile, wie rotierende Maschinen oder andere Quellen von Vibrationen, oder äussere mechanische Einflüsse, beispielsweise Windeinwirkung oder Erdbeben, verursachte Schwingungen sich nicht aufschaukeln können, und die Eigenfrequenzen der Struktur möglichst hoch sind.

In noch einer weiteren vorteilhaften Variante einer vorbesprochenen erfindungsgemässen Anlage weisen die Lagerelemente der Module eine zentrale Öffnung auf, so dass durch die Öffnungen entlang der durch jeweils zwei gepaarte Lagerelemente definierten Geraden ein Zugelement durchführbar ist bzw. durchgeführt ist.

In noch einer anderen vorteilhaften Variante einer vorbesprochenen erfindungsgemässen Anlage weist das Verbindungselement ein Durchloch aufweist, durch welches ein Zugelement durchführbar ist bzw. durchgeführt ist.

Vorteilhaft sind bei einer solchen vorbesprochenen erfindungsgemässen Anlage die Module derart angeordnet, dass die Lagerelemente aller Module entlang einer Mehrzahl von zur Senkrechten parallelen Geraden gefluchtet sind, und entlang jeder dieser Geraden ein Zugelement durchführbar ist, bzw. ein Zugelement angeordnet ist.

Eine besonders vorteilhaften Variante einer vorbesprochenen erfindungsgemässen Anlage weist mindestens eine Spannvorrichtung auf zum Aufrechterhalten der Zugspannung an einem Zugelement bei Temperaturänderungen; mit einer auf einem Modul der obersten Lage oder der untersten Lage der Anlage befestigten oder gelagerten Grundstruktur, einem gegenüber der Grundstruktur entlang der Längsachse des Zugelements beweglichen Lager und einem Federelement, das zwischen der Grundstruktur und dem beweglichen Lager angeordnet ist, wobei ein erstes Ende des Zugelementes auf dem beweglichen Lager der Spannvorrichtung aufliegt oder mit diesem verbunden ist, ein zweites Ende des Zugelementes an einer entgegen gesetzten Seite der Anlage auf einem Gegenlager aufliegt oder mit diesem verbunden ist. und wobei das Verhältnis D1/D2 einer ersten Federkonstante D1 des Zugelements zu einer zweiten Federkonstanten D2 des Federelements mindestens 4/1 beträgt, bevorzugt mindestens 6/1, und besonders bevorzugt mindestens 9/1.

Ein erfindungsgemässes Montageset zum Aufbau einer modularen Anlage gemäss dem ersten Aspekt der Erfindung umfasst
- mehrere Module mit einer Tragstruktur, wobei auf einer Oberseite der Tragstruktur drei oder mehr Lagerelemente angeordnet sind, die eine erste Ebene definieren; auf einer der Oberseite abgewandten Unterseite der Tragstruktur drei oder mehr Lagerelemente angeordnet sind, die eine zur ersten Ebene parallele zweite Ebene definieren; jeweils ein Lagerelement auf der Oberseite und ein Lagerelement auf der Unterseite ein Paar bilden und gefluchtet zueinander entlang einer zur Normalen der Ebenen parallelen Geraden angeordnet sind; und die genannten Lagerelemente eine konische Ausnehmung aufweisen;
- mehrere Verbindungselemente, welche die Form eines Doppelkegels oder eines Doppelkegelstumpfs aufweisen; und
- ein oder mehrere Zugelemente;
- wobei die Kegelmantelflächen der Verbindungselemente und die Kegelmantelflächen der Aufnahmen der Lagerelemente derart geformt sind, dass ein Kegel bzw. Kegelstumpf eines Verbindungselements bündig in der konischen Aufnahme eines Lagerelements aufliegen kann, ohne dass ein Teil des dazugehörigen Moduls auf einer Oberfläche des Verbindungelements aufliegt, die nicht zur Mantelfläche des genannten Kegels bzw. Kegelstumpfs gehört, insbesondere nicht auf einer zur Längsachse des Doppelkegels oder Doppelkegelstumpfs senkrechten Oberfläche des Verbindungelements.

Vorteilhaft weisen die Lagerelemente der Module eine zentrale Öffnung auf, so dass durch die Öffnungen entlang der durch jeweils zwei gepaarte Lagerelemente definierten Geraden ein Zugelement durchführbar ist.

In einer vorteilhaften Ausführungsform eines solchen erfindungsgemässen Montagesets weisen die Verbindungselemente ein Durchloch auf, durch welches ein Zugelement durchführbar ist.

Eine weitere vorteilhaften Ausführungsform eines solchen erfindungsgemässen Montagesets umfasst mindestens eine Spannvorrichtung zum Aufrechterhalten der Zugspannung an einem Zugelement bei Temperaturänderungen, mit einer auf einem Modul befestigbaren oder lagerbaren Grundstruktur, einem gegenüber der Grundstruktur beweglichen Lager und einem Federelement, das zwischen der Grundstruktur und dem beweglichen Lager angeordnet ist, wobei ein erstes Ende eines Zugelementes auf dem beweglichen Lager der Spannvorrichtung lagerbar oder mit diesem verbindbar ist, und wobei das Verhältnis D1/D2 einer ersten Federkonstante D1 des Zugelements zu einer zweiten Federkonstanten D2 des Federelements mindestens 4/1 beträgt, bevorzugt mindestens 6/1, und besonders bevorzugt mindestens 9/1.

In einem zweiten Aspekt der Erfindung weist eine erfindungsgemässe modulare Anlage mehrere quaderförmige Anlagemodule auf, die in zwei oder mehr Lagen übereinander gestapelt angeordnet sind. Die Module weisen eine Tragstruktur mit Befestigungspunkten auf, wobei die Befestigungspunkte vorgesehen sind zu Verbindung eines Moduls mit entsprechenden Befestigungspunkten der angrenzenden Module einer darüber und/oder darunter liegenden Lage. Die Module einer Lage sind mit den angrenzenden Modulen der darüber und/oder darunter liegenden Lage in der horizontalen Ebene (in der Waagrechten) formschlüssig verbunden. Es ist weiter mindestens eine Zugkraftvorrichtung mit einem Zugelement vorgesehen, mit der entlang der Senkrechten (Lot-Achse) eine unterste Lage von Modulen bzw. ein Fundamentblock gegenüber einer obersten Lage von Modulen mit einer Zugkraft beaufschlagt werden kann, so dass die Module zwischen der genannten untersten Lage und der genannten obersten Lage mit den angrenzenden Modulen der darüber und/oder darunter liegenden Lage entlang der Senkrechten an den Befestigungspunkten kraftschlüssig aneinandergedrückt und so fixiert werden.

Die Zugkraftvorrichtung umfasst vorteilhaft einen Anker für das Zugelement in einem Modul der untersten Lage, und eine Spannvorrichtung, mit welcher das Zugelement gespannt werden kann, und/oder die Zugspannung aufrecht erhalten werden kann. Das Zugelement kann beispielsweise als eine einzige oder mehrere parallele Zugstangen ausgeführt sein, oder als ein einzelnes oder mehrere parallele Zugseile. Besonders vorteilhaft weist die Zugkraftvorrichtung ein Federelement auf, welches Längenänderungen des Zugelements aufgrund äusserer Faktoren, beispielsweise Temperaturänderungen, in einem bestimmten Mass ausgleichen kann.

Vorteilhaft sind bei einer solchen modularen Anlage wechselweise Lagen mit einem Träger-Modul und einem oder mehreren Funktionsmodulen übereinander angeordnet sind.

In einer anderen vorteilhaften Ausführungsvariante einer solchen modularen Anlage sind die Module derart angeordnet, dass bei mindestens einer Lage von Modulen die Befestigungspunkte von zwei oder mehr Modulen der genannten Lage mit Befestigungspunkten eines gemeinsamen Moduls einer darüber liegenden und/oder einer darunter liegenden Lage verbunden sind. Dies führt dazu, dass benachbarte Module einer Lage über das gemeinsam verbundene Modul einer anderen Lage mechanisch verbunden sind, was bei der gesamten Anlage zu einer Versteifung führt.

Ebenso ist es vorteilhaft, wenn bei einer erfindungsgemässen modularen Anlage die Module derart verschränkt angeordnet und gestapelt sind, dass zumindest ein Teil der Module ein dreidimensionales Gitter bilden. Auch dieses Merkmal führt zur mechanischen Versteifung der gesamten Anlage.

Die derart gesamthaft mechanisch stabilisierte modulare Anlage kann aufgrund ihrer grossen Steifheit nur in einem sehr geringen Ausmass schwingen, so dass durch einzelne Anlageteile, wie rotierende Maschinen oder andere Quellen von Vibrationen, oder äussere mechanische Einflüsse, beispielsweise Windeinwirkung oder Erdbeben, verursachte Schwingungen sich nicht aufschaukeln können, und die Eigenfrequenzen der Struktur möglichst hoch sind.

Alternativ oder zusätzlich sind bei einer solchen erfindungsgemässen modularen Anlage auf einer Oberseite der Tragstruktur der Module drei oder mehr Lagerelemente angeordnet, die eine erste Ebene definieren; und sind auf einer der Oberseite abgewandten Unterseite der Tragstruktur drei oder mehr Lagerelemente angeordnet sind, die eine zur ersten Ebene parallele zweite Ebene definieren. Jeweils ein Lagerelement auf der Oberseite und ein Lagerelement auf der Unterseite bilden ein Paar und sind gefluchtet zueinander entlang einer zur Normalen der Ebenen parallelen Geraden angeordnet. Die Lagerelemente dienen als Befestigungspunkte der Module.

Besonders vorteilhaft weisen bei einer solchen Ausführungsform einer erfindungsgemässen Anlage die Lagerelemente der Module eine konische Ausnehmung auf. Zusätzlich oder alternativ weisen die Lagerelemente der Module eine zentrale Öffnung auf, so dass durch die Öffnungen entlang der durch jeweils zwei gepaarte Lagerelemente definierten Geraden ein Zugelement durchführbar ist bzw. durchgeführt ist.

Zwischen zwei gepaarten Lagerelementen eines Moduls kann jeweils eine Tragsäule angeordnet sein. Diese nimmt die statischen Kräfte entlang der Senkrechten auf.

In einer vorteilhaften Variante sind zwei einander zugewandte Lagerelemente zweier aneinandergrenzender Module benachbarter Lagen durch ein Verbindungselement verbunden. Besonders vorteilhaft weisen die Lagerelemente der Module eine konische Ausnehmung auf, und weist das Verbindungselement die Form eines Doppelkegels oder eines Doppelkegelstumpfs auf, wobei jeweils ein Kegel bzw. Kegelstumpf des Verbindungselements bündig in der konischen Aufnahme eines der zwei Lagerelemente angeordnet ist. Das Verbindungselement weist vorteilhaft ein Durchloch aufweist, durch welches ein Zugelement durchführbar ist bzw. durchgeführt ist.

Besonders vorteilhaft sind bei einer erfindungsgemässen modularen Anlage die Module derart angeordnet, dass die Lagerelemente aller Module entlang einer Mehrzahl von zur Senkrechten parallelen Geraden gefluchtet sind. Entlang jeder dieser Geraden ist ein Zugelement durchführbar bzw. ist ein Zugelement angeordnet.

Ein erfindungsgemässes Modul für eine modulare Anlage weist eine Tragstruktur auf, wobei auf einer Oberseite der Tragstruktur drei oder mehr Lagerelemente angeordnet sind, die eine erste Ebene definieren, und auf einer der Oberseite abgewandten Unterseite der Tragstruktur drei oder mehr Lagerelemente angeordnet sind, die eine zur ersten Ebene parallele zweite Ebene definieren. Jeweils ein Lagerelement auf der Oberseite und ein Lagerelement auf der Unterseite bilden ein Paar und sind gefluchtet zueinander entlang einer zur Normalen der Ebenen parallelen Geraden angeordnet.

Vorteilhaft weisen die Lagerelemente eines solchen erfindungsgemässen Moduls eine konische Ausnehmung auf. Alternativ oder zusätzlich weisen die Lagerelemente eine zentrale Öffnung auf, so dass durch die Öffnungen entlang der durch jeweils zwei gepaarte Lagerelemente definierten Geraden ein Zugelement durchführbar ist.

In einer weiteren vorteilhaften Variante ist zwischen zwei gepaarten Lagerelementen jeweils eine Tragsäule angeordnet.

An der Tragstruktur eines solchen Moduls kann eine äussere Hülle angebracht sein. In einer vorteilhaften Variante ist die äussere Hülle als Standard-Frachtcontainer (ISO-Container) ausgeführt.

Ein erfindungsgemässes Montageset zum Aufbau einer erfindungsgemässen modularen Anlage umfasst mehrere erfindungsgemässe Module und ein oder mehrere Zugelemente. Besonders vorteilhaft weist ein solches Montageset eine Mehrzahl von Verbindungselementen auf, mit welchen die Befestigungspunkte der Module verbunden werden können.

In einem dritten Aspekt der Erfindung umfasst eine erfindungsgemässe modulare Anlage, insbesondere eine modulare Industrieanlage, mehrere quaderförmige Funktionsmodulen, die in zwei oder mehr Lagen übereinander gestapelt angeordnet sind, und mehrere Verbindungsmodulen. Ein Verbindungsmodul ist zwischen den sich gegenüber liegenden Seitenflächen zweier direkt benachbarter Funktionsmodule angeordnet, und an den entsprechenden Seitenflächen dieser Funktionsmodule jeweils an drei oder mehr in einer Ebene angeordneten Verbindungspunkten kraft- und/oder formschlüssig mit der Tragstruktur der jeweiligen Funktionsmodule verbunden.

Vorteilhaft sind zwei oder mehr Verbindungsmodule einer Gruppe von Verbindungsmodulen, die in einer gemeinsamen Ebene (x-y), (y-z), oder (x-z) angeordnet sind, als gemeinsames Verbindungsmodul ausgestaltet.

Ebenfalls vorteilhaft ist mindestens ein Paar von Funktionsmodulen durch mehr als ein Verbindungsmodul an ihren Seitenflächen verbunden.

### Kurze Beschreibung der Zeichnungen

Zum besseren Verständnis der vorliegenden Erfindung wird nachfolgend auf die Zeichnungen Bezug genommen. Diese zeigen lediglich Ausführungsbeispiele des Erfindungsgegenstands, und sind nicht dazu geeignet, die Erfindung auf die hierin offenbarten Merkmale zu beschränken.

In den nachfolgenden Figuren und der dazugehörigen Beschreibung sind gleiche oder gleich wirkende Teile mit den gleichen Bezugszeichen versehen. Module sind lediglich schematisch als Quader oder als verrundete Kuben dargestellt.
- Figur 1: zeigt schematisch eine mögliche Ausführungsform einer erfindungsgemässen modularen Anlage, (a) in Vorderansicht, (b) in Seitenansicht von links, und (c) in Draufsicht.
- Figur 2: zeigt schematisch einen Querschnitt durch die Verbindungsstelle zwischen zwei Modulen (Detail A in der erfindungsgemässen modularen Anlage aus Figur 1).
- Figur 3: zeigt schematisch einen Querschnitt durch die Verbindungsstelle zwischen einem Modul der obersten Lage und einer Spannvorrichtung (Detail B in der erfindungsgemässen modularen Anlage aus Figur 1).
- Figur 4: zeigt schematisch einen Querschnitt durch eine alternative Ausführungsform einer Spannvorrichtung.
- Figur 5: zeigt schematisch eine mögliche Ausgestaltung der Tragstruktur eines Funktionsmoduls und eines Zwischenmoduls einer erfindungsgemässen modularen Anlage wie in Figur 1 gezeigt, in Seitenansicht von links.
- Figur 6: zeigt schematisch eine weitere mögliche Ausführungsform einer erfindungsgemässen modularen Anlage, mit senkrecht ausgerichteten Modulen, (a) in Vorderansicht, und (b) in Seitenansicht von links.
- Figur 7: zeigt zwei verschiedene Ansichten (a), (b) eines dreidimensionalen Models einer weiteren Ausführungsform einer erfindungsgemässen modularen Anlage.
- Figur 8: zeigt eine schematische Darstellung einer anderen Ausführungsform einer erfindungsgemässen modularen Anlage in perspektivischer Sicht.
- Figur 9: zeigt eine schematische Darstellung noch einer anderen Ausführungsform einer erfindungsgemässen modularen Anlage in perspektivischer Sicht.
- Figur 10: zeigt eine schematische Darstellung einer weiteren Ausführungsform einer erfindungsgemässen modularen Anlage in perspektivischer Sicht.
- Figur 11: zeigt eine schematische Darstellung noch einer weiteren Ausführungsform einer modularen Anlage in perspektivischer Sicht.
- Figur 12: zeigt ebenfalls eine schematische Darstellung einer alternativen Ausführungsform einer modularen Anlage in perspektivischer Sicht.
- Figur 13: zeigt schematisch zwei mögliche Varianten einer horizontal formschlüssigen Lagerung von Funktionsmodulen in perspektivischer Sicht, (a) mit Verbindungsbolzen in einem konischen Lagerelement, und (b) mit umgreifenden seitlichen Halterungen. Teile der Module sind in der Figur weggeschnitten, um die Ausführung der Lagerung sichtbar zu machen.
- Figur 14: zeigt schematisch eine weitere Ausführungsform einer erfindungsgemässen modularen Anlage, (a) in Vorderansicht, und (b) in Seitenansicht.
- Figur 15: zeigt schematisch eine andere Ausführungsform einer erfindungsgemässen modularen Anlage in Vorderansicht.
- Figur 16: zeigt schematisch noch eine weitere Ausführungsform einer erfindungsgemässen modularen Anlage in Seitenansicht.

### Ausführung der Erfindung

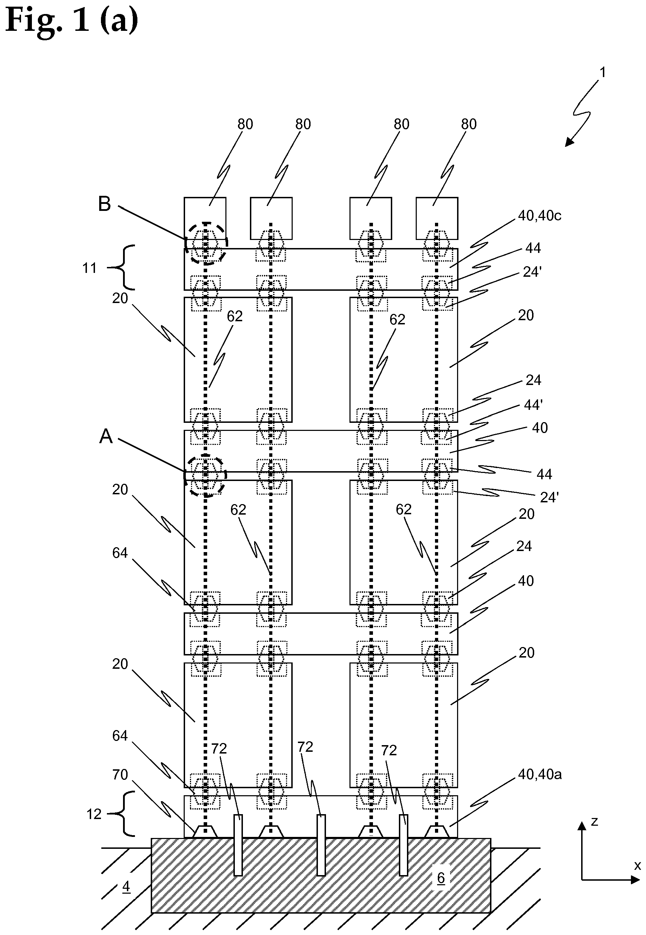

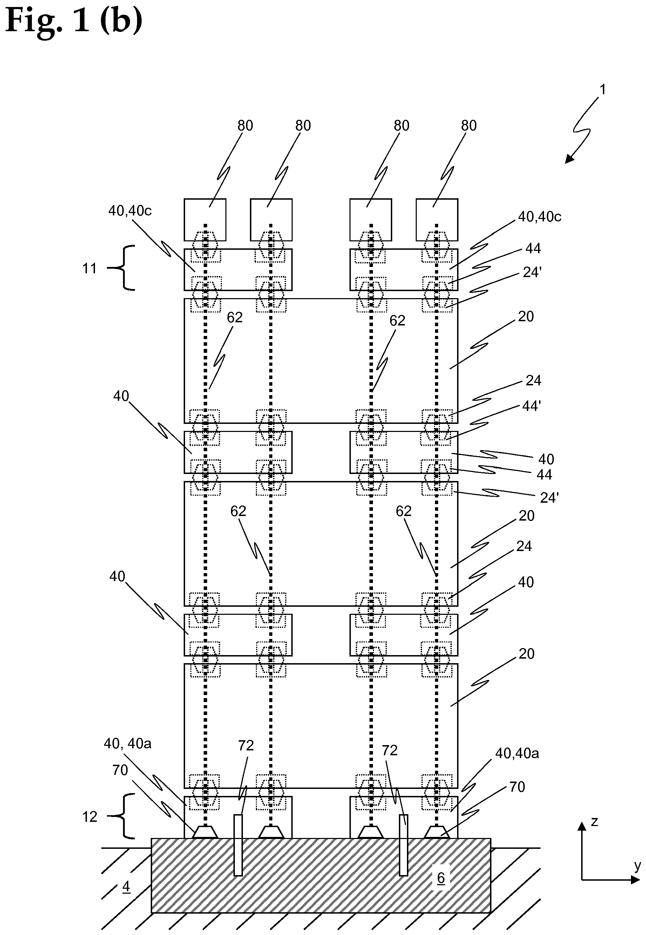

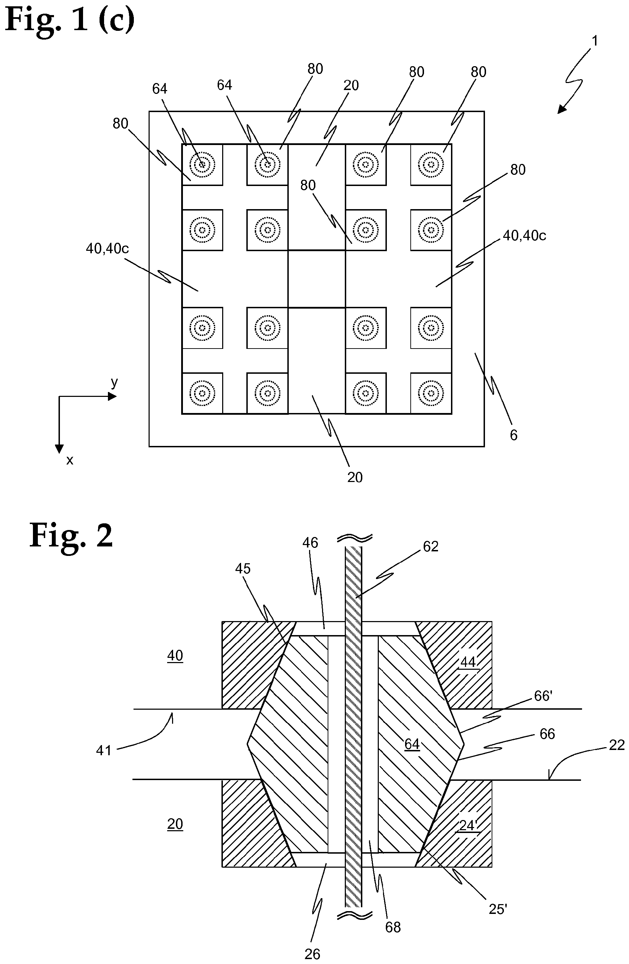

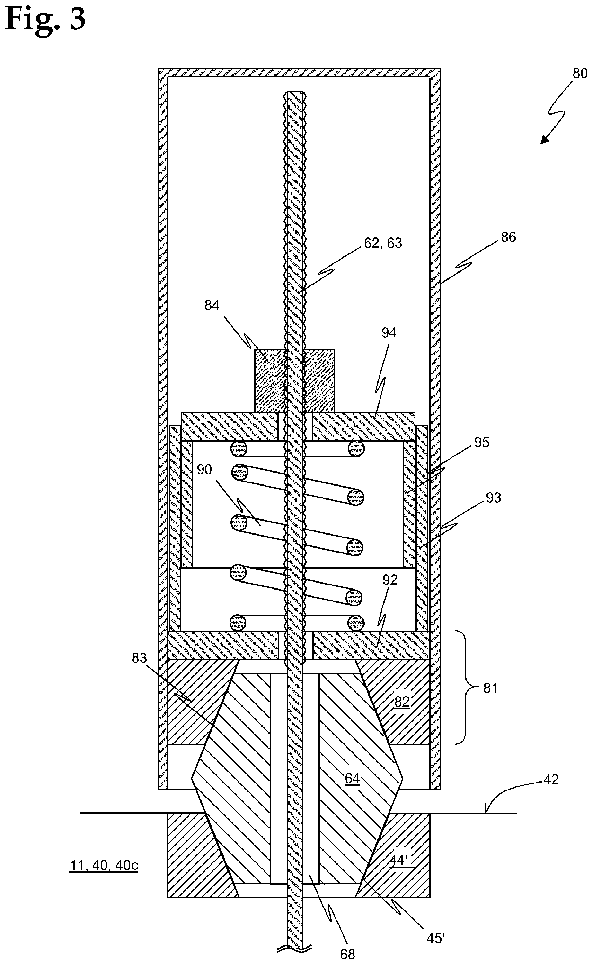

Ein mögliches Ausführungsbeispiel einer erfindungsgemässen modularen Anlage 1 ist in **Figur 1** schematisch dargestellt. Die verschiedenen Verbindungsstellen sind in den Figuren 2 und 3 schematisch gezeigt. Die modulare Anlage 1 besteht aus sechs Funktionsmodulen 20 und acht Zwischenmodulen 40, die verschränkt gestapelt auf einem gemeinsamen Fundamentsockel 6 angeordnet sind. Die in den Figuren nur schematisch gezeigten Funktionsmodule 20 und Zwischenmodule 40 haben die äussere Form eines Kubus, und bestehen aus einer Tragstruktur und den in den einzelnen Modulen vorhandenen Anlagenelementen. Auf den Aufbau der Module wird weiter unten noch eingegangen. Für die Erläuterung des Funktionsprinzip der erfindungsgemässen modularen Anlage ist es soweit ausreichend, die Module als steife, zug- und druckfeste, torsionsstabile kubische Elemente zu betrachten.

Die verschränkte Stapelung der Module hat den Effekt, dass lauf einzelne Module einwirkende Kräfte, beispielsweise aufgrund von Wind, Erdbeben oder mechanischen Vibrationen durch in der Anlage laufende Maschinen und Vorrichtungen, nicht direkt durch die Anlagenstruktur fortpflanzen können, sondern in andere Richtungen der Struktur abgelenkt werden, Es resultiert eine Versteifung der Gesamtstruktur und damit einhergehend und eine Erhöhung der Eigenschwingungsfrequenzen.

Die Module 20, 40 weisen auf der Oberseite und der Unterseite je acht Lagerelemente 24, 24' , 44, 44' auf, in welchen Verbindungselemente 64 angeordnet sind (in Figur 1 nur schematisch angedeutet), welche die Module zueinander zentrieren und in der waagrechten Ebene formschlüssig fixieren. Aufgrund ihrer Anordnung sind übereinander liegende Verbindungselemente entlang der Senkrechten (Lot-Achse) gefluchtet angeordnet. In senkrechter Richtung verlaufen durch alle Module 20, 40 und Verbindungselemente 64 hindurch Zugelemente 62, mit welchen die Module in senkrechter Richtung gegeneinander verspannt sind.

Die Verbindungselemente 64 haben im gezeigten Beispiel die Form eines spiegelsymmetrischen doppelten Kegelstumpfs mit zwei konischen Mantelflächen 66, 66' und einem Durchloch 68 zur Durchführung des im gezeigten Ausführungsbeispiel als Zugstange realisierten Zugelements 62.

Andere Formgebungen wären auch möglich, beispielsweise Pyramidenstümpfe. Jedoch hat die doppelte konische Formgebung den Vorteil, dass sich das Verbindungselement automatisch im ebenfalls konischen Lagerelement zentriert. Zudem werden beim abschliessenden Spannen der Zugelemente die konischen Verbindungselemente derart in die ebenfalls konischen Lageraufnahmen gepresst, dass bereits dadurch eine erhebliche mechanische Stabilität entsteht. Dies setzt entsprechend voraus, dass wie im gezeigten Beispiel die Verbindungselemente und die Lagerelemente derart aufeinander angepasst sind, dass ausschliesslich die konische Mantelfläche des Kegels des Verbindungselements und die konisch konkave Mantelfläche der Aufnahme des Lagerelements aufeinander aufliegen. Weiter ist es bei der gezeigten konischen Form unwichtig, welche Seite des Doppelkegelstumpfes unten liegt, und welche oben, und welche Winkelposition gegeben ist, was die Montage erleichtert. Die Verbindungselemente werden vorteilhaft aus geschmiedetem Stahl gefertigt.

Die Zugelemente 62 verlaufen zwischen Zugstangenankern 70 in der untersten Lage Zwischenmodule 40, 40a senkrecht durch alle Module 20, 40 und Verbindungselemente 64 hindurch zu Spannvorrichtungen 80 oberhalb der obersten Lage Module 40, 40c. Die Zugelemente können wie im gezeigten Beispiel als Zugstangen ausgeführt sein, insbesondere als einteilige Zugstangen, oder als aus zwei oder mehr Teilen zusammengesetzte Zugstangen. Solche Zugstangen können beispielsweise aus Stahl gefertigt sein, oder anderen geeigneten Materialien, beispielsweise Kohlefasern. Anstatt Zugstangen können auch Zugseile verwendet werden, wobei Zugseile jedoch wegen der statischen Anwendung keinen Mehrwert bieten, und Zugstangen aufgrund der einfacheren Fertigung und Montage vorteilhaft sind. Ebenso ist es möglich, mehrere parallel geführte Zugstangen oder Drahtseile als Zugelement zu verwenden.

Die Funktionsmodule 20 und die Zwischenmodule 40 weisen auf der Unterseite 21, 41 Lagerelemente 24, 44 mit konischen Mantelflächen 25, 25', 45, 45' und zentralen Öffnungen 26, 46 auf, in denen die Verbindungselemente 64 angeordnet werden. Identische Lagerelemente 24', 44' sind auf der Oberseite 22, 42 angeordnet. Diese Lagerelemente sind vorteilhaft aus einem geeigneten metallischen Werkstoff gefertigt, und mit der Tragstruktur (nicht dargestellt) des Moduls 20 stabil verbunden.

Die Verbindung zwischen zwei Modulen 20, 40 wird in **Figur 2** gezeigt (Detail A in Figur 1). Das Verbindungselement 64 ist in einem Lagerelement 24' auf der Oberseite 22 eines Funktionsmoduls 20 angeordnet, und liegt mit der unteren konischen Mantelfläche 66 auf der konischen Mantelfläche 25' des Lagerelements 24' auf. Auf der Unterseite 41 des darüber angeordneten Zwischenmoduls 40 liegt ein Lagerelement 44 mit der konischen Mantelfläche 45 auf der oberen konischen Mantelfläche 66' des Verbindungselements 64 auf. Die Zugstange 62 verläuft, von der Ankervorrichtung her kommend durch die zentrale Öffnung 26 des Lagerelements 24, durch das Durchloch 68, und durch die zentrale Öffnung 46 des Lagerelements 44, hin zur Spannvorrichtung am oberen Ende der Anlage.

Die Zwischenmodule 40, 40a der untersten Lage liegen direkt oder indirekt auf einem Betonfundament 6 auf, und sind mit geeigneten Fundamentankern 72 im Fundamentsockel 6 formschlüssig befestigt. Bei der Montage der Module 40, 40a der untersten Lage müssen gegebenenfalls Distanzelemente verwendet werden, um eine dauerhaft korrekte waagrechte Orientierung der Module auf dem Fundamentsockel sicherzustellen. In den Modulen der untersten Lage sind Zugstangenanker 70 (in der Figur 1 nur schematisch angedeutet) angeordnet, an denen die Zugstangen 62 befestigt werden. Die kann beispielsweise eine Mutter sein, die auf ein endständiges Aussengewinde der Zugstange aufgeschraubt wird. Jedoch sind dem Fachmann auch verschiedene andere Möglichkeiten bekannt, eine Zugstange reversibel in einer Struktur zu verankern.

Alternativ zur Verankerung der Zugstangen in den Modulen der untersten Lage, und der separaten Verankerung dieser Module im Fundament, wäre auch eine direkte Verankerung der Zugstangen im Fundamentblock 8 möglich. Diese Variante erfordert jedoch die Anbringung von Ankervorrichtungen und Lagerelementen im Fundament, die entsprechend präzis ausgerichtet werden müssen, und ist entsprechend aufwendiger. In einer solchen Ausführungsvariante kann im Prinzip der Fundamentblock 8 als unterstes Modul behandelt werden.

Auf der Oberseite der obersten Lage Zwischenmodule 40, 40c sind Spannvorrichtungen 80 angeordnet, welche dazu dienen, die Zugspannung der Zugelemente über einen weiten Temperaturbereich in einem bestimmten Toleranzbereich zu halten. Dies ist besonders von Bedeutung, weil die erfindungsgemässen modularen Anlagen der Witterung ausgesetzt sind, und entsprechend starken Temperaturschwankungen unterliegen können. Bei einem Längenausdehnungskoeffizienten von Stahl bei Raumtemperatur von ca. 10⁻⁵ K⁻¹ führt dies bei einer Temperaturänderungen von 50 °C, wie sie beispielsweise in Wüstengebieten innerhalb eines Tagesablaufs eintreten können, bei einer unbelasteten Zugstange aus Stahl mit einer Länge von 20 Metern zu einer Längenänderung von 10 mm. Eine Zugstange wirkt in einem geringen Dehnungsbereich als sehr steife Zugfeder mit im Wesentlichen konstanter Federkonstante. Wird eine Zugstange wie normalerweise üblich direkt gespannt, so dass die resultierende Zugkraft linear von der Dehnung der Zugstange abhängt, so führt eine solche Längenveränderung zu einem erheblichen Abfall bzw. zu einer erheblichen Zunahme der Zugspannung. Dies führt im Extremfall dazu, dass gar keine Zugspannung mehr anliegt, oder der Wert in einem zu hohen Bereich liegt, der zu Schäden an der Zugstange führen kann. Beispielsweise würde bei einer 20 mm gedehnten Zugstange von ursprünglich 20 m Länge eine Längenabnahme von -10 mm zu einer ca. 50% höheren Zugkraft führen, bzw. bei einer Längenzunahme von +10 mm zu einer ca. 50% geringeren Zugkraft.

Die Spannvorrichtung in **Figur 3** löst dieses Problem, indem ein zusätzliches Federelement 90, im dargestellten Ausführungsbeispiel als vorkomprimierte Druckspiralfeder realisiert, eine positive oder negative Längenänderung der Zugstange 62 ausgleicht. Im gespannten Zustand entspricht die Kraft der komprimierten Druckfeder 90 der entgegen gesetzten Zugkraft der als Zugfeder wirkenden Zugstange. Die Federkonstante D2 des Federelements 90 ist dabei so gewählt, dass diese erheblich geringer ist das die Federkonstante D1 der Zugstange, d.h. die Druckfeder ist weicher. Bei einer Verkürzung bzw. Verlängerung der Zugstange aufgrund von Temperaturänderungen gleicht dann die gleichzeitig komprimierte bzw. expandierte Druckfeder einen grossen Teil des Effekts der Längenänderung aus. Für die seriell angeordneten Federelemente resultiert eine Federkonstante D des gesamten Systems von 1/D = (1/D1 + 1/D2). Beträgt das Verhältnis der Federkonstanten beispielsweise D1/D2=9/1, dann beträgt die Federkonstante des Gesamtsystems noch 90% von D2, bzw. 10% von D1. Verkürzt bzw. verlängert sich nun die Zugstange aufgrund einer Temperaturabnahme, so beträgt die Zunahme bzw. Abnahme der Zugkraft nur ca. 10% des Wertes gegenüber einem System nur mit Zugstange, ohne Feder. Auf diese Weise verbleiben die Werte der Zugkraft bei geeigneter Wahl der Federkonstanten auch bei extremen Temperaturänderungen in einer vergleichsweise schmalen Bandbreite.

Ein weiterer Vorteil einer erfindungsgemässen modularen Anlage mit solchen Spannvorrichtungen ist das Verhalten bei Erdbeben. Bei heftigen Erdbeben ist es möglich, dass die gesamte modulare Anlage nach oben beschleunigt wird, und daraufhin wieder nach unten sackt, was einer negativen Beschleunigung entspricht. Beim letzteren wirken die Beschleunigungskräfte nicht über die Tragstruktur der Anlage, sondern über die Zugstangen. Die Druckfeder gleicht auch in solch einem Fall diese Belastung aus, und sorgt für einen sicheren Zusammenhalt der Module auch bei negativer Beschleunigung.

Das gezeigte Ausführungsbeispiel einer Spannvorrichtung 80 ist mit einem konischen Lagerelement 82 auf einem Verbindungselement 64 aufgesetzt, welches wiederum auf einem Lagerelement 44' eines Zwischenmoduls 40, 40c aufliegt, analog zu der Verbindung zwischen den Modulen 20, 40 wie oben stehend beschrieben. Auf dem Lagerelement 82 ist eine erste Auflagescheibe 92 mit einer zentralen Öffnung und einer Hülse 93 angeordnet, auf der die Druckfeder 90 aufliegt. Die Druckfeder liegt somit mit einem Ende auf einer auf der obersten Lage 11 der Module statisch gelagerten Grundstruktur 81 der Spannvorrichtung 80 auf. Die genannte Auflagescheibe 92 ist in geeigneter Weise mit dem Lagerelement 82 verbunden, beispielsweise mittels Schrauben (nicht dargestellt). Auf der Oberseite der Druckfeder liegt eine zweite Auflagescheibe 94 auf, mit einer zentralen Öffnung und einer Hülse 95. Die ineinander liegenden Hülsen 93, 95 dienen bei der Expansion/Kompression der Druckfeder als Führung. Die Auflagescheibe 94 bildet ein bewegliches Lager für das obere Ende der Zugstange. Die Zugstange 62 weist an ihrem oberen Ende 63 ein Aussengewinde auf. Auf diesem ist eine Mutter 84 aufgeschraubt, welche die Zugkraft der Zugstange 62 auf die zweite Auflagescheibe 94 und damit auf die Druckfeder 90 überträgt. Ein demontierbares Gehäuse 86 schützt die Spannvorrichtung vor Witterungseinflüssen.

Anstatt einzelner Elemente könnten Verbindungselement 64 und Lagerelement 82 auch einstückig ausgeführt sein. Ebenso kann bei geeigneter Dimensionierung des Lagerelements 82 bzgl. der darauf abstützenden Druckfeder 90 auf die Auflagescheibe 92 verzichtet werden. Anstatt mit einer Druckfeder kann das Federelement einer Spannvorrichtung auch mit einer Zugfeder realisiert werden, welche oberhalb der Zugstange angeordnet wird. Ebenfalls möglich ist die Verwendung mehrerer Druckfedern, oder gestapelter Tellerfedern.

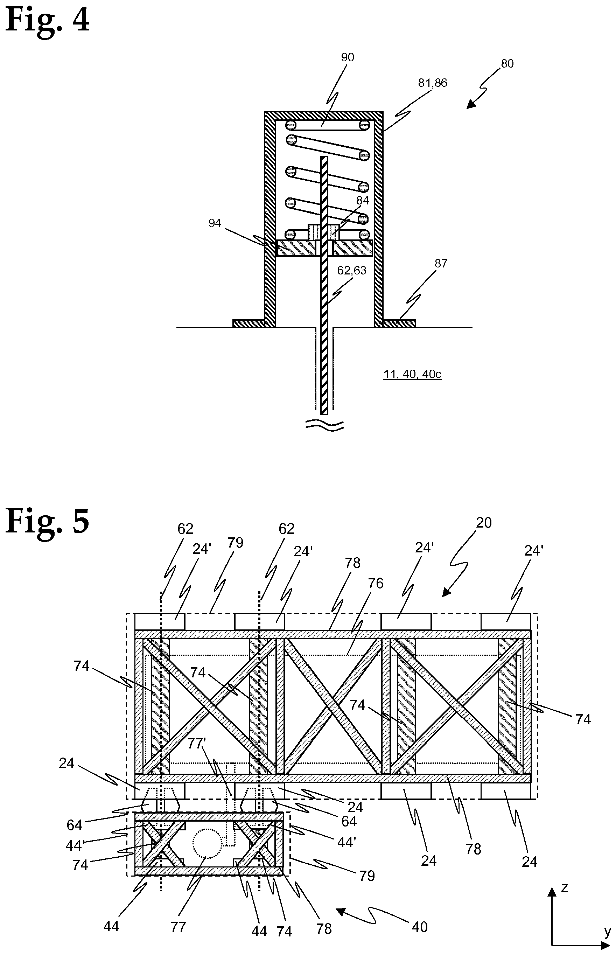

**Figur 4** zeigt eine weitere mögliche Ausführungsform einer Spannvorrichtung 80, in welcher das Federelement 90 als vorgespannte Spiralzugfeder ausgestaltet ist. Die Grundstruktur 81 in der Form eines Hohlzylinders ist mit einem Flansch 87 auf einem Modul der obersten Lage 11 befestigt. Die Befestigung kann beispielsweise durch Schweissen, Schrauben oder andere geeignete Befestigungsarten erfolgen. Ein bewegliches Lager 94 ist mit einem Ende der Zugfeder 90 verbunden. Ein anderes Ende der Zugfeder ist mit einer Platte am oberen Ende der Grundstruktur 81 verbunden. Die Auflagescheibe 94 bildet ein bewegliches Lager für die Zugstange 62. Das obere Ende 63 der Zugstange 62 verläuft durch eine Öffnung des beweglichen Lagers, und stützt sich mittels einer auf einem Aussengewinde (nicht dargestellt) der Zugstange angeordneten Schraubenmutter auf dem Lager 94 ab. Analog zum oben genannten ersten Beispiel einer Spannvorrichtung entspricht im fertig montierten Zustand die Kraft der gespannten Zugfeder 90 der entgegen gesetzten Zugkraft der als Zugfeder wirkenden Zugstange 62. Für die Verhältnisse der Federkonstanten gilt das gleiche wie bei der bereits besprochenen Verwendung einer Druckfeder. Entsprechend wird bei einer positiven oder negativen Längenänderung der Zugstange aufgrund einer Temperaturänderung die Längenänderung im Wesentlichen durch eine entsprechende negative oder positive Längenänderung der weicheren Zugfeder ausgeglichen, so dass die Änderung der effektiven Zugspannung wesentlich reduziert wird.

Bei der Montage einer modularen Anlage müssen die Zugstangen mit geeigneten Mitteln auf die gewünschte Zugkraft gespannt werden. Anschliessend hält die Spannvorrichtung 80 diese Spannung aufrecht. In Figur 3 befindet sich die Druckfeder 90 bereits in komprimiertem Zustand bei gespannter Zugstange. Dazu müssen jedoch vorgängig sowohl Zugstange 62 als auch Druckfeder 90 gespannt worden sein. Dies kann separat geschehen, indem beispielsweise mit einer geeigneten externen Vorrichtung die Druckfeder 90 auf einen bestimmten Druckkraftwert komprimiert wird, und anschliessend bei der noch unbelasteten Zugstange 62 die Mutter 84 bündig auf die zweite Auflagescheibe 94 aufgeschraubt wird. Nach dem Entfernen der äusseren Krafteinwirkung auf die Druckfeder expandiert diese, und spannt dabei gleichzeitig die Zugstange, bis das Gleichgewicht erreicht ist, bei welchem die Kräfte der Druckfeder und der Zugstange identisch sind. Alternativ können Zugstange und Druckfeder auch gleichzeitig gespannt werden. Dazu kann beispielsweise auf der Zugstange 62 oberhalb der Mutter 84 eine Hydraulikvorrichtung angebracht werden, welche nach unten auf die Druckfeder wirkt. Dabei spannt die Hydraulikvorrichtung gleichzeitig die Druckfeder und die Zugstange, bis die gewünschte Zugspannung erreicht ist. Anschliessend wird die Mutter 84 bündig auf die zweite Auflagescheibe geschraubt, so dass beim Entfernen der Hydraulikvorrichtung die Zugspannung erhalten bleibt.

Anstatt eines Federelementes können auch hydraulische Mittel vorgesehen sein, um eine Längenänderung der Zugstange auszugleichen, oder pneumatische Federn, wobei letztere bei wechselnden Temperaturen wenig vorteilhaft sind. Ebenfalls möglich sind Kombinationen von hydraulischen Kolben und Federsystemen. Die Spannvorrichtung kann zusätzlich auch Dämpfungselemente aufweisen, um das Aufschaukeln von Schwingungen im statischen System vermeiden.

In einer vorteilhaften alternativen Ausführungsvariante ist das Federelement zwischen dem Zugstangenanker und dem Modul der untersten Lage angeordnet, was funktionell zur oben stehend diskutierten Spannvorrichtung identisch ist. Jedoch wird die Zugstange weiterhin von der oberen Seite her gespannt. Eine solche Variante hat den Vorteil, dass die Federelemente platzsparend in den Modulen 40a der untersten Lage untergebracht werden können.

Die Anlagenmodule 20, 40 einer erfindungsgemässen modularen Anlage 1 müssen für den Einsatz als statisches Element der Anlagenstruktur neben den oben stehend bereits erwähnten Merkmalen und kompatiblen Aussenmassen lediglich die statischen Funktionen wahrnehmen können. Ansonsten können die Module 20, 40 beliebig an die vorgesehenen Einsatzzwecke angepasst sein. Die statischen Funktionen beinhalten zum einen das Aufnehmen der Last entlang der Zugelemente, und zum anderen eine ausreichende Steifigkeit und mechanische Stabilität.

In **Figur 5** sind die statischen Bauelemente eines Funktionsmoduls 20 und eines Zwischenmoduls 40 gezeigt, wie sie in Figur 1 (b) dargestellt sind. Die anderen Module 20, 40 sind der besseren Übersichtlichkeit halber weggelassen. Das Funktionsmodul 20 und das Zwischenmodul 40 umfasst jeweils eine Tragstruktur 78 in Form eines Gitterrahmens. Mit dieser stabil verbunden sind acht Tragsäulen 74, die zwischen den Lagerelementen 24, 24' angeordnet sind. Jede Tragsäule weist über ihre gesamte Länge einen Hohlraum auf (nicht dargestellt), durch welche die Zugstange 62 geführt ist.

Im fertig montierten Zustand der modularen Anlage nehmen die Tragsäulen der Module, sowie die zwischen den übereinander liegenden Modulen angeordneten Lagerelemente und Verbindungselemente, das Gewicht der Anlage auf und leiten es ins Fundament. Die Tragstruktur 78 eines Moduls wiederum trägt die verschiedenen Vorrichtungen und Anlagenelemente etc., die zu einem bestimmten Modul gehören, und versteift gleichzeitig das Modul. Durch die wechselweise längs und quer angeordneten Module der verschiedenen Lagen wird schliesslich die modulare Anlage als Ganzes versteift.

Anstatt über Tragsäulen können Module einer erfindungsgemässen modularen Anlage das Gewicht der darüber liegenden Module und die Zugkraft der Zugstangen auch über die Tragstruktur selber aufnehmen, was entsprechend stabiler dimensionierte Tragstrukturen erfordert.

Die Aussenhülle 79 des Funktionsmoduls 20, bzw. des Zwischenmoduls 40, hat keine direkte statische Funktion, und dient vor allem als Witterungsschutz. Die Aussenhülle kann entsprechend ohne Beeinträchtigung der Stabilität auch weggelassen werden. Für den Fall, dass die Aussenmasse der Module kompatibel zu Standardfrachtcontainern (ISO-Container) gewählt sind, um den effizienten Transport mittels Lastwagen, Bahn und Frachtschiff zu ermöglichen, können die entsprechenden Halterungsvorrichtungen etc. an dieser Aussenhülle angebracht werden, beispielsweise die üblichen Halterungsecken (engl. "corner castings"). Die Aussenhülle kann in einem solchen Fall der Struktur eines herkömmlichen Frachtcontainers entsprechen, beispielsweise einem 20-Fuss-, 40-Fuss- oder 45-Fuss-Container, wobei die Aussenhülle in einem solchen Fall nur während des Transports eine statische Funktion erfüllt. Die Dimensionierung der Anlagenmodule ist jedoch keineswegs auf solche Containerformate beschränkt. Die Module können auch kleinere oder grössere Dimensionen aufweisen.

Innerhalb eines Moduls sind die Anlagenelemente etc. des Moduls angeordnet, die sich je nach Modul unterscheiden können. Im gezeigten Beispiel ist im Funktionsmodul 20 innerhalb der Tragstruktur 78 ein schematischgezeigtes grösseres Anlagenelement 76 angeordnet. Dies kann beispielsweise eine Maschine, ein Tank, ein Stromgenerator, ein Wärmetauscher oder ein chemischer Reaktor sein. Es können auch begehbare Steuerungseinrichtungen, Aufenthaltsräume etc. vorgesehen sein. Dies sind jedoch lediglich Beispiele zur Illustration. Sollte aus statischen Gründen ein zusätzliches Funktionsmodul benötigt werden, ohne das in diesem Anlagenelemente angeordnet sind, so kann ein solches Funktionselement auch nur aus einer nackten Tragstruktur bestehen. In einem solchen Fall ist es jedoch vorteilhafter, das entsprechende Modul als Transportmodul auszugestalten, in welchem während dem Transport der modularen Anlage Material transportiert werden kann, beispielsweise Verbindungselemente oder Zugstangensegmente.

Im Zwischenmodul 40, das eine geringere Höhe als das Funktionsmodul 20 aufweist, können Leitungen 77, Kabelschächte u.ä. angeordnet sein, um verschiedene Module operativ miteinander zu verbinden. Im Figur 5 ist beispielhaft eine in Längsrichtung des Zwischenmoduls 40 angeordnete Leitung 70 gezeigt, welche über eine weitere Leitung 77' mit dem Anlagenelement 76 des darüber liegenden Funktionsmoduls 20 verbunden ist. Eine Verbindung der Leitungsteile innerhalb der Module 20, 40 kann erst nach der Montage der gesamten modularen Anlage oder zumindest der entsprechenden Module erstellt werden. Da sich ein Grossteil der Leitungen, Kabel etc. innerhalb der Module befindet, beschränken sich diese Verbindungsarbeiten jedoch auf den Einbau kurzer Verbindungsstücke, bzw. das Zusammenschliessen von Kabeln.

Im bisher gezeigten Ausführungsbeispiel wurden zwei Grundtypen von Modulen kombiniert, die sich in den relativen Aussenmassen unterscheiden. Der Vorteil der nur einen Drittel der Höhe der Funktionsmodule 20 aufweisenden Zwischenmodule 40 ist, dass für den Transport drei solche Module gestapelt und temporär zu einer Einheit verbunden werden können, mit im wesentlichen gleichen Aussenmassen wie die Funktionsmodule.

Es ist jedoch im Rahmen der Erfindung auch möglich, eine modulare Anlage mit Modulen mit einheitlichen Massen aufzubauen, d.h. eine Anlage nur mit Funktionsmodulen. Ebenso ist es möglich, mehr als zwei Modulformate zu verwenden, solange eine erfindungsgemässe Stapelung und Verspannung möglich ist.

Für gewisse Industrieanlagen sind Anlageteile notwendig, die sehr hoch sind im Vergleich zur Grundfläche, beispielsweise Destillationskolonnen, Rauchgasreinigungsanlagen, Silos, etc. Solche Anlageteile lassen sich nicht in die bisher gezeigten Module verbauen. Jedoch ist es möglich, solche Anlageteile in Module zu verbauen, welche waagrecht transportiert werden können, und in der modularen Anlage schliesslich hochkant stehend verbaut werden.

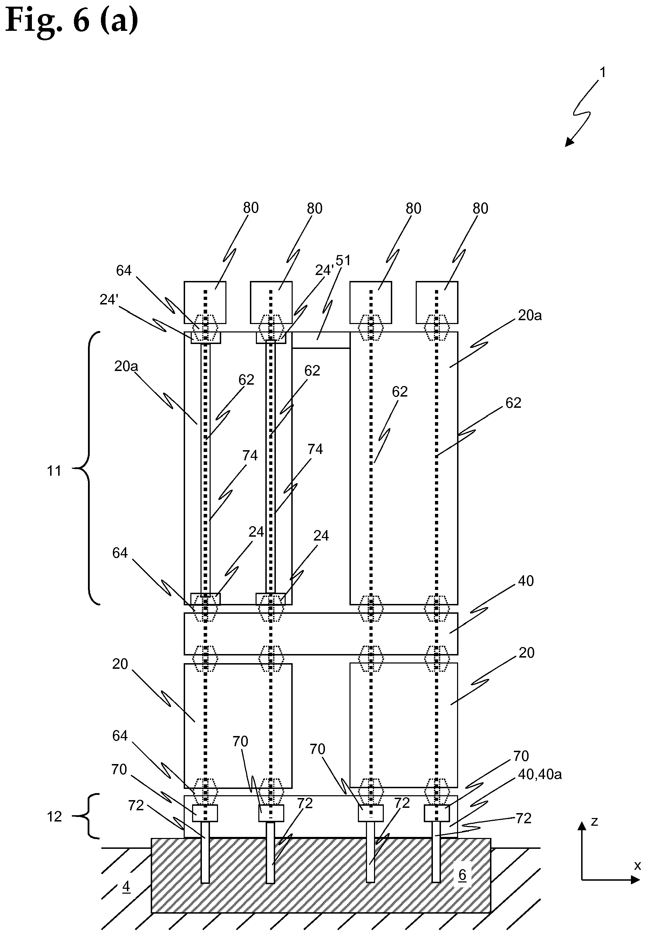

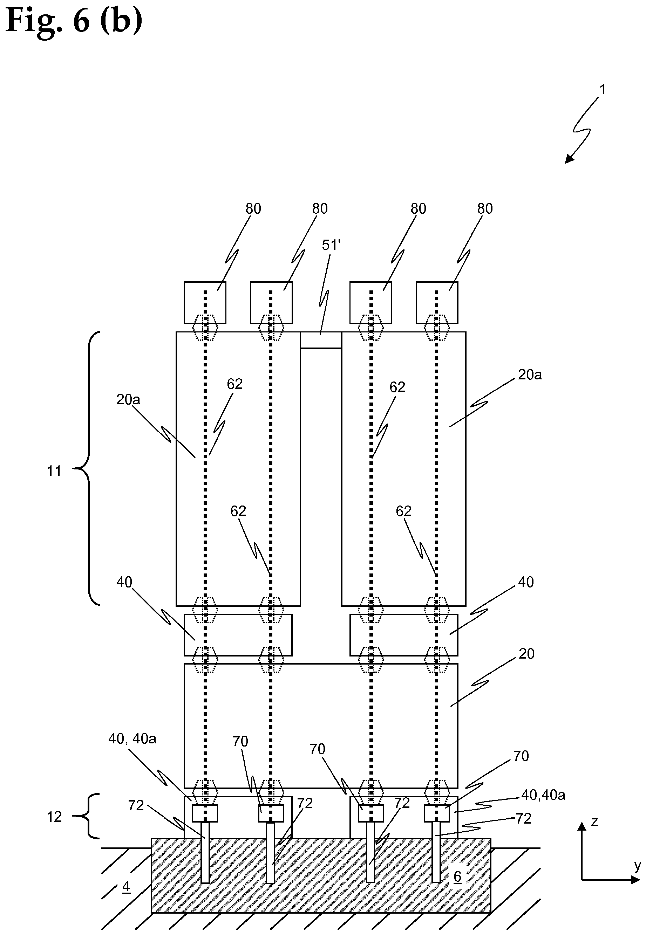

Ein solches Ausführungsbeispiel einer erfindungsgemässen modularen Anlage ist in **Figur 6** dargestellt. Die ersten drei Lagen Module 40a, 20, 40 sind identisch zu Figur 1. Auf der zweiten Lage von Zwischenmodulen 40 jedoch sind vier Hochmodule 20a angeordnet, welche wiederum auf einer unteren Seite und einer oberen Seite je vier Lagerelemente 24, 24' aufweisen (nur in Figur 6(a) im linken Modul 20a schematisiert dargestellt), zur Aufnahme der Verbindungselemente 64. Zwischen den Lagerelementen 24, 24' sind Tragsäulen 74 angeordnet.

Zur Stabilisierung der Hochmodule können auf der Oberseite zwei Lagen verschränkt angeordnete Module angeordnet sein. Sind diese der Stabilisierung dienenden Module jedoch störend, beispielsweise bei einem nach oben offenen Hochmodul, so können stattdessen wie im gezeigten Ausführungsbeispiel zwischen benachbarten Hochmodulen 20a Querverstrebungen 51, 51' angebracht werden.

Für den Transport können die Module 20a auf eine definierte untere Seite abgelegt werden, so dass die Lagerelemente 24, 24' an den Stirnseiten des Moduls liegen. Auf diese Weise ist es insbesondere möglich, ein Hochmodul mit der Aussenhülle eines Standardfrachtcontainers zu versehen, wobei im montierten Zustand die längsseitigen Enden des Containers die Oberseite und Unterseite des Hochmoduls bilden.

Im Ausführungsbeispiel in Figur 6 ist weiter eine alternative Befestigung der Anlage 1 auf dem Fundament 6 gezeigt. Anstatt die Fundamentanker an der Tragstruktur der unteren Module 40a zu befestigen, wie in Figur 1 dargestellt, sind diese in der Verlängerung der Zugelemente 62 und Zuganker 70 angeordnet, so dass mechanische Kräfte beispielsweise während eines Erdbebens direkt vom Untergrund 4 über das Fundament 6 auf die Zugelemente 62 übertragen werden.

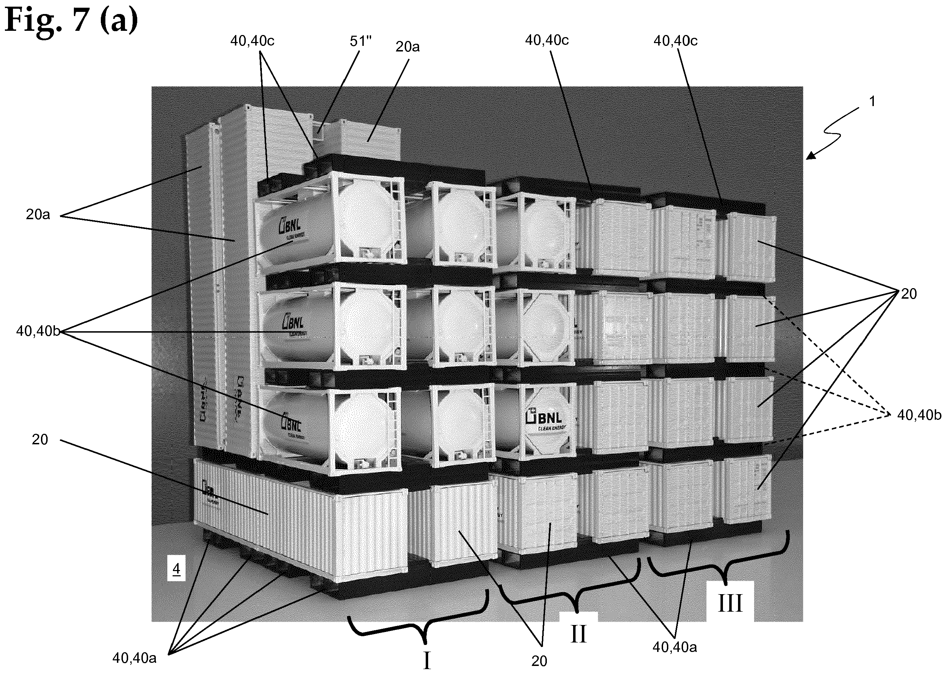

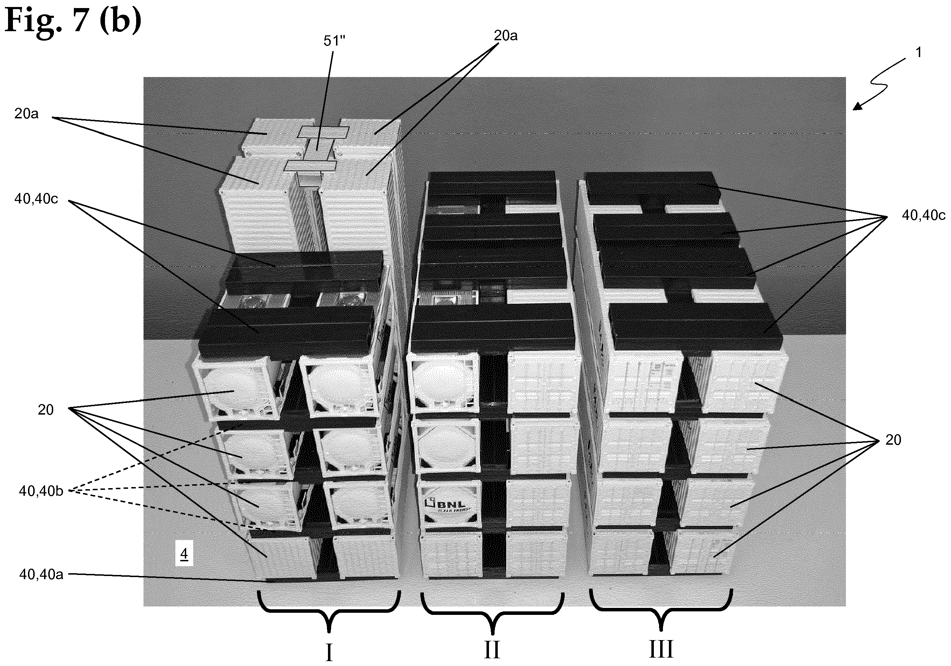

In einer weiteren möglichen Ausgestaltungsform einer erfindungsgemässen modularen Anlage sind die Zwischenmodule 40 derart ausgestaltet, dass jeweils vier Zwischenmodule in einen herkömmlichen Standardtransportcontainer passen. Die Funktionscontainer wiederum haben das Format herkömmlicher 20-Fuss- bzw. 40-Fuss-Container. Ein Modell einer solchen erfindungsgemässen modularen Anlage 1 ist in den **Figuren 7(a)** **und** **(b)** in zwei verschiedenen Ansichten abgebildet. Die dargestellte Anlage besteht aus drei separaten Blöcken I, II, III. Beispielhaft besteht der Block I in einer untersten Lage aus vier Zwischenmodulen 40a, welche mit dem Fundamentblock (nicht dargestellt) fest verbunden sind. Auf dieser untersten Lage sind rechtwinklig dazu zwei Funktionsmodule 20 in der äusseren Hülle eines 40-Fuss-Frachtcontainers angeordnet. Diese Funktionsmodule weisen entsprechend sechzehn Lagerelemente auf der Oberseite und auf der Unterseite auf, sowie dazwischen liegend sechzehn Tragsäulen. Nach einer weiteren Lage mit vier Zwischenmodulen 40, 40b folgen auf einer vorderen Seite des Blocks I wechselweise drei Lagen Funktionsmodule 20 in der äusseren Form eines 20-Fuss-Tankcontainers, sowie Zwischenmodule 40. Die Spannvorrichtungen sind im gezeigten Beispiel in die Zwischenmodule 40, 40c der obersten Lage integriert. Auf einer hinteren Seite des Blocks I sind vier Hochmodule 20a angeordnet. Die Spannvorrichtungen sind in die Oberseite der Hochmodule 20 integriert. Zur Stabilisierung der Hochmodule 20a sind die vier Module durch ein zentrales Querstrebenelement 51" verbunden, welches alle vier Hochmodule 20a steif verbindet.

Da die Länge und Breite der Zwischenelemente 40 geringer ist als diejenige der Funktionsmodule 20, resultiert beim gezeigten Ausführungsbeispiel eine dichtere, platzsparendere Bauweise als beispielsweise in Figur 1 dargestellt.

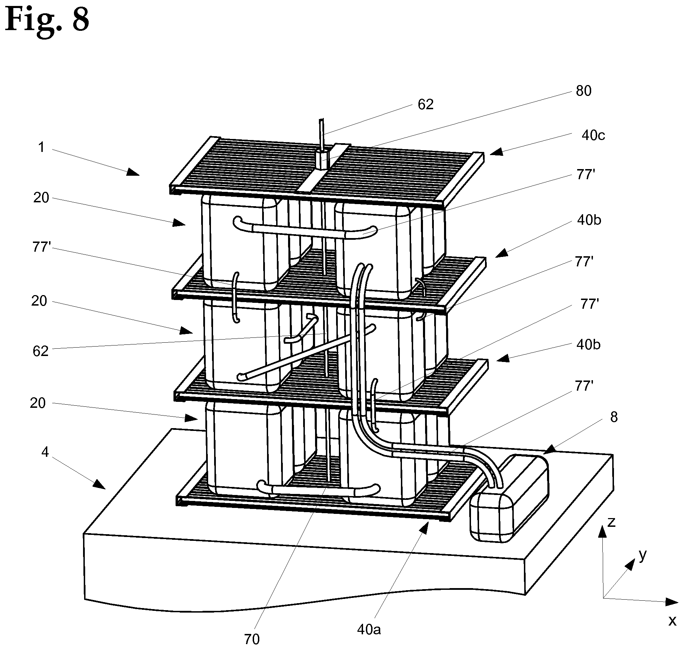

Eine weitere mögliche Ausgestaltungsform einer erfindungsgemässen modularen Anlage 1 ist in **Figur 8** dargestellt. Die Anlage 1 verfügt über zwölf Funktionsmodule 20 (schematisiert dargestellt als abgerundete Kuben), die verteilt auf drei vertikal übereinander (d.h. in z-Richtung) liegenden Anlagenebenen im Wesentlichen parallel (x/y-Ebene) zur Oberfläche des Untergrunds 4 angeordnet sind. In der dargestellten Ausführungsbeispiel befinden sich vier Funktionsmodule 20 einer unteren Anlagenebene auf einem Grundträger-Modul 40a, dass wiederum in geeigneter Weise auf dem Untergrund 4 angeordnet ist, beispielsweise auf einem oder mehreren Fundamentblöcken (nicht dargestellt). Die vier Funktionsmodule 20 der unteren Anlagenebene haben eine im Wesentlichen identische Höhe. Auf ihnen ist ein Zwischenträger-Modul 40b angeordnet, auf dessen Oberseite wiederum vier Funktionsmodule 20 in einer mittleren Anlagenebene angeordnet sind. Auf den Funktionsmodulen 20 der mittleren Anlagenebene befindet sich ein weiteres Zwischenträger-Modul 40b, auf dem vier Funktionsmodule 20 auf einer oberen Anlagenebene angeordnet sind. Aufliegend auf der Oberseite der vier Funktionsmodule 20 der oberen Anlagenebene ist schliesslich ein Deckträger-Modul 40c vorgesehen.

Ein zentrales Zugelement 62 erstreckt sich senkrecht in z-Richtung von einem im Untergrund 4 befestigten Anker (nicht dargestellt) durch entsprechende Öffnungen der Module 40a, 40b, 40c hindurch über alle Anlagenebenen bis zum Deckträger-Modul 40c. Das Zugelement 62 befindet sich dazu im Wesentlichen im Mittelpunkt der jeweiligen Anlagenebenen, d.h. sie hat jeweils ungefähr dieselbe Distanz zu den vier Funktionsmodulen 2 einer Anlagenebene, so dass eine symmetrische Kraftverteilung resultiert.

Als Zugelement 62 können wie bei den vorangegangenen Ausführungsvarianten eine einzelne Zugstange oder mehrere parallele Zugstangen aus Stahl oder Kohlefasern, oder ein oder mehrere parallele Drahtseile dienen. Ebenso kann ein Zugelement aus mehreren gleichartigen oder unterschiedlichen seriell aneinander gehängten Einzelelementen bestehen.

Alternativ oder zusätzlich ist auch eine Befestigung des Zugelements 62 am Grundträger-Modul 40a möglich. In solchen Ausführungsformen der Erfindung kann die Verankerung der gesamten Anlage durch eine geeignete Verankerung des Grundträger-Moduls 40a im Untergrund 4 erfolgen.

Im Bereich seines oberen Endes steht das Zugelement 62 in mechanischer Wirkverbindung mit einer Spannvorrichtung 80, welches das Zugelement 62 mit einer Zugkraft beaufschlagt. Aufgrund dieser Zugkraft sind die verschiedenen Zwischenmodule 40, 40a, 40b und die Funktionsmodule 20 in senkrechter Richtung so gegeneinander verspannt, dass auch ohne Verschraubungen oder ähnlichem die Module 20, 40a, 40b, 40c stabil zusammenhalten.

Die Spannvorrichtung 80 ist im gezeigten Ausführungsbeispiel auf dem Deckträger-Modul 40c angebracht. kann jedoch auch im Innern oder unterhalb des Deckträger-Moduls 40c angeordnet sein.

Deckträger-Modul 40c, Zwischenträger-Module 40b und auch Grundträger-Modul 40a können beispielsweise aus Stahlprofil-Strukturen hergestellt werden. Es sind jedoch auch andere Konstruktionsarten zur Herstellung leichter plattenförmiger (flächiger) Tragstrukturen mit ausreichender mechanischer Festigkeit und Steifigkeit möglich, beispielsweise Wabenstrukturen oder korrugierte Bleche. Da die Kraftverteilung von der zentralen Zugstange auf die Funktionsmodulstapel über das Grundträgermodul 40a und das Deckträger-Modul 40c erfolgt, müssen diese stabiler ausgestaltet sein als die Zwischenträgermodule 40b, welche im Wesentlichen vor allem die die Steifigkeit der Gesamtstruktur der Anlage 1 sicherstellen.

Die verschiedenen Funktionsmodule 20 des gezeigten Ausführungsbeispiels einer modularen Anlage 1 sind in geeigneter miteinander wirkverbunden, beispielsweise über Leitungen zum Transport von fluiden Materialien, Stromleitungen, Steuerkabel etc. Die in Figur 8 gezeigten Beispiele solcher Verbindungsleitungen 77' sind dabei rein illustrativ zu verstehen. Eine erfindungsgemässe modulare Anlage 1 kann zudem externe Anlagen-Module 8 umfassen.

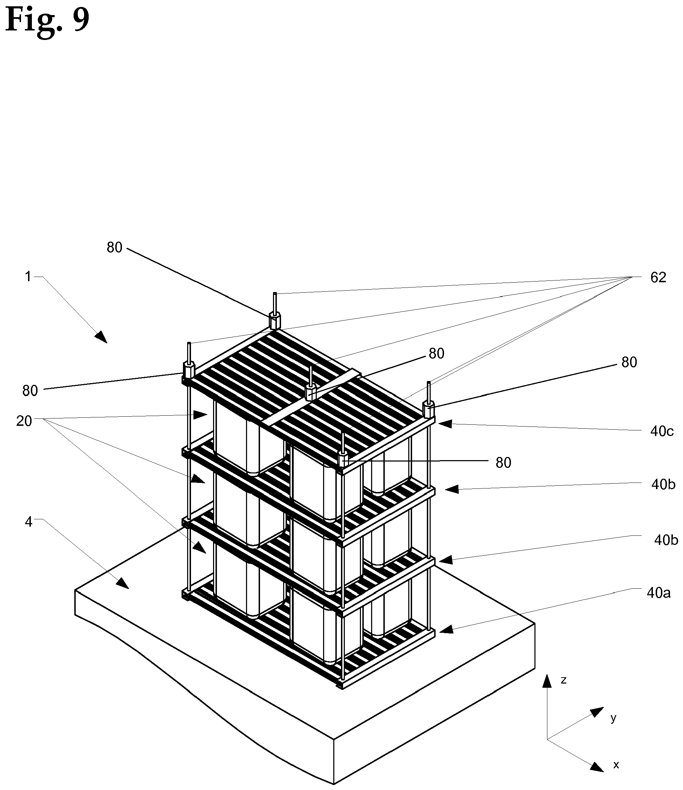

**Figur 9** zeigt eine weitere erfindungsgemässe modulare Anlage 1 mit in drei Ebenen angeordneten Funktionsmodulen 20, ähnlich dem Beispiel aus Figur 8, wobei die Verbindungsleitungen der Übersichtlichkeit halber weggelassen sind. Die Module 20, 40a, 40b, 40c sind im gezeigten Beispiel mit fünf Zugelementen 62 verspannt. Die Verwendung mehrerer verteilter Zugelemente 62 ermöglicht im Vergleich zu einem einzigen Zugelement 62 insbesondere den Einsatz eines Deckträger-Moduls 40c mit einer geringeren Plattensteifigkeit, wodurch leichtere und kostengünstigere Konstruktionen für das Deckträger-Modul verwendet werden können. Ebenso ermöglicht die Verwendung mehrerer Zugelemente 62 eine bessere Anpassung der Anlage an die mechanischen Eigenschaften der Funktionsmodule 20.

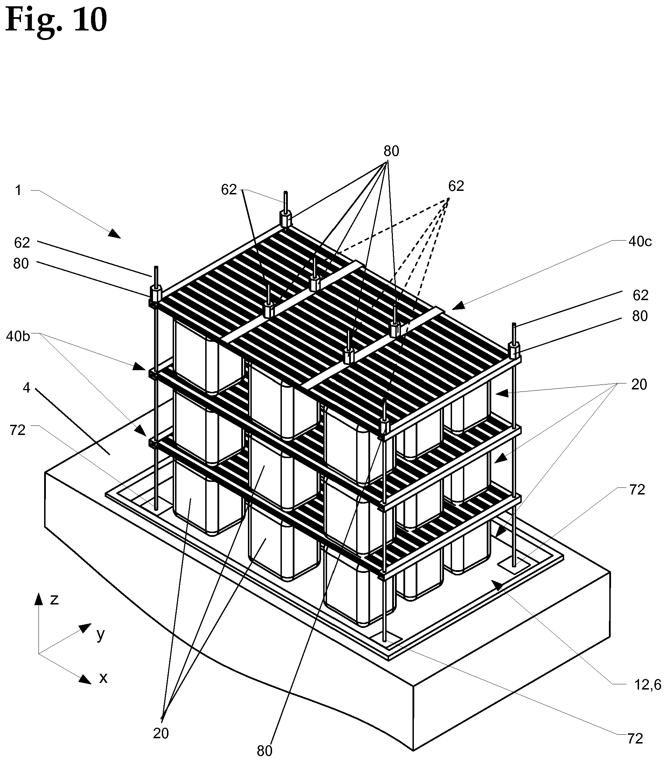

**Figur 10** zeigt eine weitere Variante einer erfindungsgemässen modularen Anlage 1, mit 27 in drei Ebenen angeordneten Funktionsmodulen 20, die mit acht Zugelementen 62 verspannt sind. Das Grundträger-Modul 40a besteht im Wesentlichen aus einer Wanne 12, vorteilhaft aus Stahlbeton, die teilweise in den Untergrund 4 eingelassen ist. Die Verankerung der Zugelemente 62 erfolgt über Ankervorrichtungen 72 in der Wanne. Die Wanne 12 dient insbesondere als Sicherheitsvorkehrung, indem sie bei Störungen innerhalb der Anlage einem unkontrollierten Austreten von Flüssigkeiten in die Umwelt entgegenwirkt. Solche Auffangwannen werden deshalb für chemische Produktionsanlagen oft als Sicherheitsmassnahme vorgeschrieben.

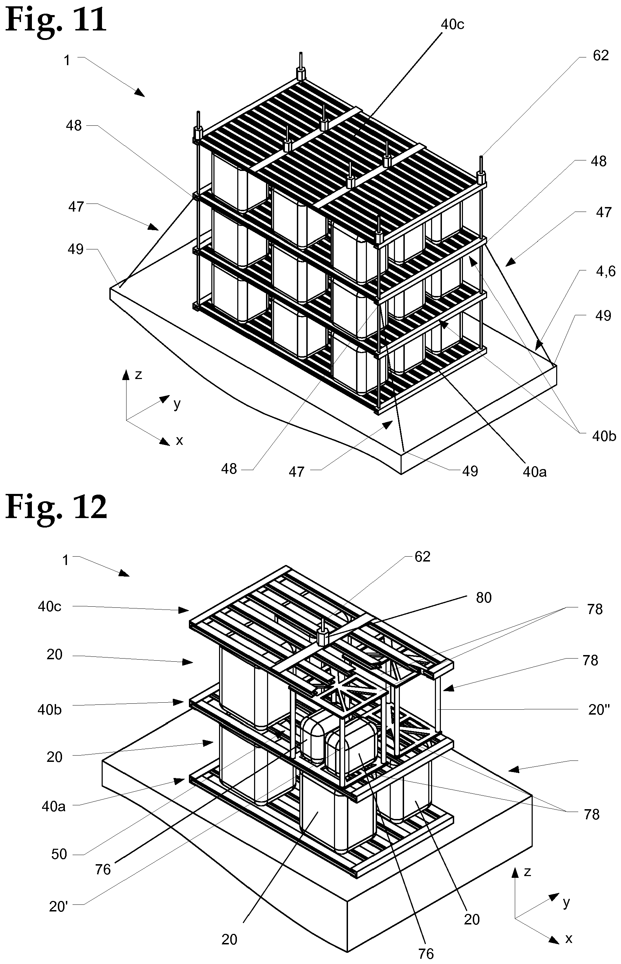

**Figur 11** zeigt eine weitere vorteilhafte Ausführungsform einer erfindungsgemässen modularen Anlage 1, die im Grundaufbau demjenigen aus Figur 10 entspricht. Zur zusätzlichen Stabilisierung gegen seitlich wirkenden Kräfte verfügt die Anlage 1 über Abspannungen 47, die auf den Zwischenträger-Modulen 40b liegende Abspannpunkte 48 mit äusseren Verankerungen 49 mechanisch verbinden. Auf diese Weise können insbesondere Scherkräfte der Anlage in x/y-Richtung reduziert werden. Zusätzlich oder alternativ sind auch Abspannungen zwischen auf dem Deckträger-Modul liegenden Abspannpunkten und äusseren Verankerungen möglich.

**Figur 12** zeigt ein anderes Ausführungsbeispiel einer erfindungsgemässen modularen Anlage 1 mit in zwei Anlagenebenen angeordneten Funktionsmodulen 20, 20', 20". Um auch Anlagenelemente 76 installieren zu können, deren Höhe stark von den Funktionsmodulen 20 derselben Anlagenebene abweicht, sind diese in einem Funktionsmodul 20' angeordnet, das im Wesentlichen aus einer Tragstruktur 78 besteht. Zur besseren Sichtbarmachung der Tragstruktur ist ein Teil des darüber liegenden Deckträger-Moduls 40c weggelassen. Ebenso kann ein nur aus der Tragstruktur 78 bestehendes Funktionsmodul 20" auch als Platzhalter verwendet werden, um Stellen zu besetzen, an denen sich keine operativen Funktionsmodule 20 befinden. Dies kann beispielsweise dann sinnvoll sein, wenn bestimmte Stellen innerhalb der Anlage für mögliche spätere Erweiterungen der Anlage frei gehalten werden sollen.

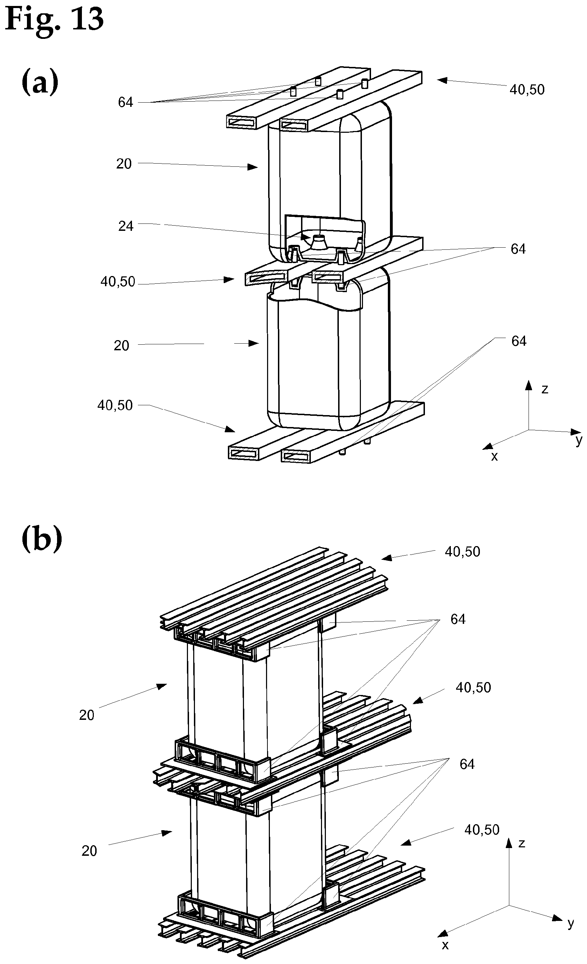

**Figur 13** zeigt zwei andere mögliche horizontal formschlüssige Lagerungen von Funktionsmodulen 20 auf Trägern 50 eines Zwischenträger-Moduls 40b (bzw. Grundträger-Moduls 40a oder Deckenträger-Moduls 40c), wie es insbesondere bei den Ausführungsformen aus den Figuren 8 bis 12 angewendet werden kann. Die horizontal formschlüssige Lagerung verhindert Verschiebungen der einzelnen Funktionsmodule 20 gegenüber den Trägern 50 bzw. dem Zwischenmodul 40a/40b/40c in horizontaler Richtung.

In der in Figur 13(a) dargestellten Ausführungsform besteht die horizontal formschlüssige Lagerung im Wesentlichen aus in vertikaler Richtung (z-Richtung) ausgerichteten Bolzen 64, die in konischen Bolzenaufnahmen 24, 24' der Funktionsmodule 20 formschlüssig gehalten sind. Es ist auch möglich, dass ein Bolzen durch einen Träger hindurch gehend ausgestaltet und gleichzeitig zur horizontal formschlüssigen Lagerung zweier übereinander angeordneter Funktionsmodule verwendet wird. Figur 13(b) zeigt eine weitere Variante einer horizontal formschlüssigen Lagerung. Die Funktionsmodule 20 werden dabei von Rahmenelementen 64 gegen Verschiebungen in horizontaler Richtung abgestützt. Die Rahmenelemente 64 befinden sich in fester mechanischer Verbindung mit den Trägern 50.

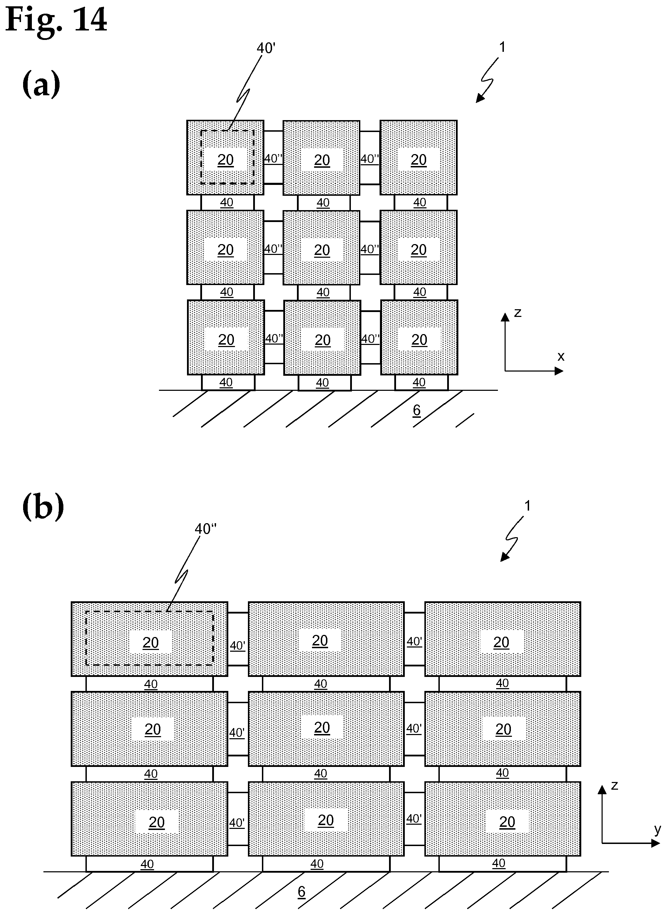

Eine weitere Ausführungsform einer erfindungsgemässen modularen Anlage 1 ist in **Figur 14** schematisch dargestellt, umfassend eine Mehrzahl quaderförmiger Module 20 und Verbindungsmodule 40, 40', 40". In der Vorderansicht in Figur 14(a) ist zur Illustration die Position des hinter dem Modul 20 links oben angeordneten, nicht sichtbaren Verbindungsmoduls 40' gestrichelt angegeben. Das gleiche gilt analog für die anderen Funktionsmodule 20. In der Seitenansicht von Figur 14(b) wieder ist die Position des nicht sichtbaren Verbindungsmoduls 40" gestrichelt angezeigt.

Auf einem Fundamentsockel 6 sind neun flache, quaderförmige Verbindungsmodule 40 entlang eines Gitters angeordnet, und mit geeigneten Mitteln, wie sie bereits für andere Ausführungsformen beschrieben worden sind, mit dem Fundamentsockel 6 verbunden. Auf jedem dieser Verbindungsmodule der untersten Lage ist ein Funktionsmodul 20 angeordnet, und mit dem darunter liegenden Verbindungsmodul 40 form- und/oder kraftschlüssig verbunden. Benachbarte Module 20 sind an den Seitenflächen über flache, im Wesentlichen quaderförmige Verbindungsmodule 40" form- und/oder kraftschlüssig verbunden, und analog an den Frontflächen über flache, quaderförmige Verbindungsmodule 40'. Die form- und/oder kraftschlüssige Verbindung zwischen Funktionsmodulen und Verbindungsmodulen 40, 40', 40" kann beispielsweise durch Verschrauben erfolgen, oder andere geeignete reversible Befestigungsmethoden, wie zum Beispiel Schnappverschlüsse, Bajonettverschlüsse usw. Auch eine Befestigung durch Verschweissen ist möglich, wobei jedoch in einem solchen Fall die Anlage nur ineffizient wieder abgebaut werden kann. Bevorzugt in senkrechter Richtung, aber auch in waagrechter Richtung kann die form- und/oder kraftschlüssige Verbindung auch durch geeignete Verspannung der Module mit Zugelementen erfolgen, wie sie weiter oben bereits vertieft diskutiert worden ist. In einem solchen Fall verlaufen Tragsäulen der inneren Tragstruktur der Funktionsmodule bevorzugt zwischen senkrecht übereinander liegenden Befestigungspunkten.

Die Verbindungsmodule 40, 40', 40" sind jeweils mit entsprechenden Befestigungspunkten an den Seitenwänden der Funktionsmodule verbunden, wobei vorteilhaft mindestens 4 bis 8 Verbindungspunkte pro Seitenfläche vorgesehen sind. Die Verbindungspunkte der Module 20, 40, 40', 40" sind Teil der Tragstruktur 78 der Module, wie sie beispielsweise in Figur 5 bereits erläutert worden ist.

Zum Aufbau der gesamten Anlage werden nacheinander die einzelnen Funktionsmodule 20 und Verbindungsmodule 40, 40', 40" positioniert und aneinander befestigt, und so die Anlage von unten nach oben aufgebaut. Funktionsmodule können auch bereits vor der Montage mit einzelnen Verbindungsmodulen verbunden und in dieser Form als kombinierter Baustein auf der Anlage platziert werden, um so die Anzahl der Montageschritte beim eigentlichen Aufbau zu reduzieren.

Die Verbindungsmodule können Teile der Infrastruktur enthalten, wie beispielsweise Rohrleitungsabschnitte, Kabelschächte, elektrische Leitungen und kleinere Apparaturen. Es ist jedoch auch möglich, diese Module in Verbindungsrichtung besonders flach auszugestalten, wenn diese im Wesentlichen ausschliesslich eine Verbindungsfunktion aufweisen sollen. In einem solchen Fall können Verbindungsmodule zur Verbindung von Funktionsmodulen mit der Grösse von ISO-Containern beispielsweise eine Höhe von lediglich 10 cm aufweisen.

Ein modularer Aufbau erlaubt eine wesentlich erhöhte Torsionsstabilität. Die Gesamtheit der Module wird versteift. Insbesondere kann eine in waagrechter Wirkung wirkende Kraft, beispielsweise aufgrund von Windeinwirkung oder durch rotierende Maschinen, nur eine geringe laterale Auslenkung der Gesamtstruktur bewirken. Ohne sich auf eine bestimmte Theorie festzulegen sind die Anmelder der Meinung, dass dieser Effekt dadurch erreicht wird, dass eine in waagrechter Richtung auf ein Funktionsmodul wirkende Kraft durch die in sich sehr steifen Verbindungsmodule, die in drei verschiedenen Orientierungen zwischen den Funktionsmodulen angeordnet sind, rechtwinklig zur Kraftwirkung zu beiden Seiten und nach oben und unten umgelenkt werden. Isolierte Verbindungspunkte hingegen weisen nur eine geringe Torsionssteifigkeit auf, so dass Kräfte sich viel stärker entlang ihrer ursprünglichen Richtung durch die Gesamtstruktur fortpflanzen können. Eine laterale Krafteinwirkung auf ein einzelnes Modul führt so zu einer erheblich höheren lateralen Verschiebung der Module der betroffenen Lage gegenüber der Gesamtstruktur. Das gleiche gilt natürlich auch für Kräfte in senkrechter Wirkung.

Ein derartiger versteifter Aufbau einer modularen Anlage hat gegenüber dem Stand der Technik, bei welchem die einzelnen Module an isolierten Verbindungspunkten an den zusammenstossenden Ecken oder Kanten miteinander verbunden werden, insbesondere den Vorteil, dass wegen der geringen Verschiebungsbewegungen zwischen den Modulen für Leitungen, welche zwischen zwei Modulen Verlaufen, keine speziellen Massnahmen getroffen werden müssen. So können beispielsweise Hochdruckdampfleitungen zwischen zwei benachbarten Modulen angeordnet sein, ohne dass ein aufwendiger Expander für den Ausgleich von dynamischen Geometrieänderungen der Leitung notwendig ist.

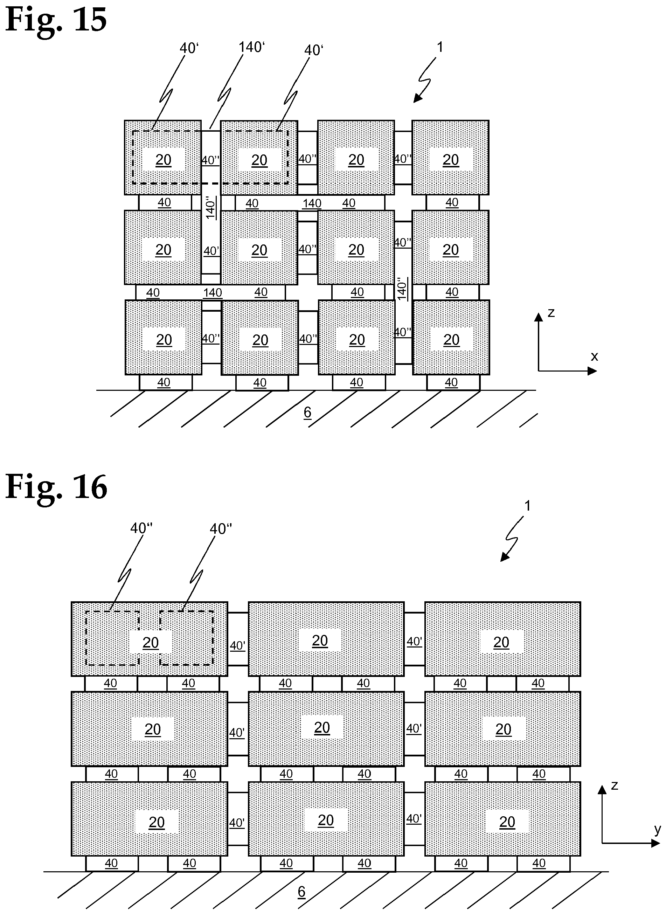

**Figur 15** zeigt schematisch eine weitere Ausführungsform einer solchen modularen Anlage, bei der zwischen der ersten und zweiten Lage und der zweiten und dritten Lage Funktionsmodule 20 jeweils zwei in der (x-y) Ebene parallele, direkt benachbarte Verbindungsmodule 40 als gemeinsames Verbindungsmodul 140 ausgestaltet sind. Analog sind zwei Paare von in der (y-z) Ebene parallele, direkt benachbarte Verbindungsmodule 40" als gemeinsames Verbindungsmodul 140" ausgestaltet. Gestrichelt ist auch ein nicht sichtbares gemeinsames Verbindungsmodul 140' in der (x-z) Ebene dargestellt.

Die Verwendung solcher gemeinsamer Verbindungselemente hat den Vorteil, dass die Gesamtstruktur der Anlage allgemein zusätzlich versteift wird. Durch gezielte Platzierung solcher gemeinsamer Verbindungsmodule 140, 140', 140" in den drei Ebenen (x-y), (x-z), (y-z) kann zudem die Steifigkeit der gesamten Struktur je nach Bedarf angepasst werden.

**Figur 16** zeigt schematisch noch eine weitere Ausführungsform einer solchen modularen Anlage, bei der für die Verbindung der langen Seitenflächen der Funktionsmodule 20 jeweils zwei Verbindungsmodule 40, 40" eingesetzt werden, während für Verbindung der Frontseiten ein einziges Verbindungsmodul vorgesehen ist. Diese Ausführungsvariante hat den Vorteil, dass alle Verbindungsmodule in der Formgebung und im inneren Aufbau identisch gestaltet werden können.

Die vorliegende Erfindung ist in ihrem Umfang nicht auf die hier beschriebenen spezifischen Ausführungsformen beschränkt. Vielmehr ergeben sich für den Fachmann aus der Beschreibung und den dazugehörigen Figuren zusätzlich zu den hier offenbarten Beispielen verschiedene weitere Modifikationen der vorliegenden Erfindung, die ebenfalls in den Schutzbereich der Ansprüche fallen. Zusätzlich werden in der Beschreibung verschiedene Referenzen zitiert, deren Offenbarungsgehalt hiermit in deren Gesamtheit durch Referenz in

### Bezugszeichenliste

- 1: Modulare Anlage
- 4: Untergrund
- 6: Fundamentsockel
- 8: externes Anlagen-Modul
- 9: Verbindungsleitungen
- 11: oberste Modullage
- 12: unterste Modullage
- 12: Auffangwanne
- 20,20a: Funktionsmodul
- 20, 20', 20": Funktionsmodul
- 20a: Hochmodul
- 21: Unterseite
- 22: Oberseite
- 24, 24': Lagerelement, Aufnahme für Verbindungselement
- 25, 25': konische Mantelfläche
- 26: zentrale Öffnung
- 40, 40', 40": Zwischenmodul, Verbindungsmodul
- 40a: Grundträger-Modul
- 40b: Zwischenträger-Modul
- 40c: Deckenträger-Modul
- 41: Unterseite
- 42: Oberseite
- 44, 44': Lagerelement, Aufnahme für Verbindungselement
- 45, 45': konische Mantelfläche
- 46: zentrale Öffnung
- 47: Abspannung
- 48: Abspannpunkt (Befestigung)
- 49: äussere Verankerungen
- 50: Träger
- 51, 51', 5": Querstrebe
- 62: Zugelement, Zugstange
- 64: Verbindungselement, Verbindungskonus
- 66, 66': konische Mantelfläche
- 68: Durchloch
- 70: Zugstangenanker, Gegenlager
- 72: Fundamentanker
- 74: Tragsäulen
- 76: Anlagenelemente
- 77, 77': Leitungen
- 78: Tragstruktur
- 79: Hülle, Aussenwand
- 80: Spannvorrichtung
- 81: Grundstruktur
- 82: Lagerelement, Aufnahme für Verbindungselement
- 83: konische Mantelfläche
- 84: Mutter
- 86: Gehäuse
- 87: Flansch
- 90: Federelement, Druckfeder
- 92: erste Auflagescheibe
- 93: Hülse
- 94: zweite Auflagescheibe, bewegliches Lager
- 95: Hülse
- 140: gemeinsames Verbindungsmodul

## Patentansprüche

1. Modulare Anlage (1), insbesondere eine modulare Industrieanlage, mit mehreren quaderförmigen Anlagemodulen (20, 20a, 40, 40a, 40b, 40c), die in zwei oder mehr Lagen übereinander gestapelt angeordnet sind; wobei
die Module eine Tragstruktur (78) mit Befestigungspunkten (24, 24', 44, 44') aufweisen;
die Befestigungspunkte vorgesehen sind zu Verbindung eines Moduls mit entsprechenden Befestigungspunkten der angrenzenden Module einer darüber und/oder darunter liegenden Lage;
die Module (20, 40) einer Lage mit den angrenzenden Modulen (40, 20) der darüber und/oder darunter liegenden Lage in der horizontalen Ebene (x-y) formschlüssig verbunden sind (24, 24', 64, 44, 44');
mindestens eine Zugkraftvorrichtung (62, 70, 80) mit einem Zugelement (62) vorgesehen ist, mit der entlang der Senkrechten (z) eine unterste Lage von Modulen (40a) bzw. ein Fundamentblock (6) gegenüber einer obersten Lage von Modulen (40c) mit einer Zugkraft beaufschlagt werden kann, so dass die Module zwischen der genannten untersten Lage und der genannten obersten Lage mit den angrenzenden Modulen (40, 20) der darüber und/oder darunter liegenden Lage entlang der Senkrechten (z) an den Befestigungspunkten kraftschlüssig aneinandergedrückt und so fixiert werden;
auf einer Oberseite (22, 42) der Tragstruktur (78) der Module (20, 20a, 40) drei oder mehr Lagerelemente (24', 44') angeordnet sind, die eine erste Ebene definieren, und auf einer der Oberseite abgewandten Unterseite (21, 41) der Tragstruktur drei oder mehr Lagerelemente (24, 44) angeordnet sind, die eine zur ersten Ebene parallele zweite Ebene definieren; wobei die Lagerelemente als Befestigungspunkte der Module dienen;
jeweils ein Lagerelement auf der Oberseite und ein Lagerelement auf der Unterseite ein Paar bilden und gefluchtet zueinander entlang einer zur Normalen der Ebenen parallelen Geraden angeordnet sind; und
zwei einander zugewandte Lagerelemente (24, 24', 44, 44') zweier aneinandergrenzender Module (20, 20a, 40) benachbarter Lagen durch ein Verbindungselement (64) verbunden sind;
**dadurch gekennzeichnet, dass**
die genannten Lagerelemente (24, 24', 44, 44') eine konische Ausnehmung (25, 25' 45, 45') aufweisen; und
das Verbindungselement (64) die Form eines Doppelkegels oder eines Doppelkegelstumpfs aufweist, und jeweils ein Kegel bzw. Kegelstumpf des Verbindungselements in der konischen Aufnahme eines der zwei Lagerelemente angeordnet ist und direkt bündig auf dieser aufliegt.

2. Modulare Anlage nach Anspruch 1, wobei die Kegelmantelflächen (66, 66') der Verbindungselemente (64) und die Kegelmantelflächen (25, 25') der Aufnahmen der Lagerelemente (24, 24') derart geformt sind, dass ein Kegel bzw. Kegelstumpf eines Verbindungselements bündig in der konischen Aufnahme eines Lagerelements aufliegen kann, ohne dass ein Teil des dazugehörigen Moduls auf einer Oberfläche des Verbindungelements aufliegt, die nicht zur Mantelfläche des genannten Kegels bzw. Kegelstumpfs gehört, insbesondere nicht auf einer zur Längsachse des Doppelkegels oder Doppelkegelstumpfs senkrechten Oberfläche des Verbindungelements.

3. Modulare Anlage nach einem der vorangegangenen Ansprüche, wobei wechselweise Lagen mit einem Träger-Modul (40, 40a, 40b, 40c, 6) und einem oder mehreren Funktionsmodulen (20, 20', 20", 20a) übereinander angeordnet sind.

4. Modulare Anlage nach einem der vorangegangenen Ansprüche, wobei die Module (20, 20a, 40) derart angeordnet sind, dass bei mindestens einer Lage von Modulen die Befestigungspunkte von zwei oder mehr Modulen der genannten Lage mit Befestigungspunkten eines gemeinsamen Moduls einer darüber liegenden und/oder einer darunter liegenden Lage verbunden sind.

5. Modulare Anlage nach einem der vorangegangenen Ansprüche, wobei die Module (20, 20a, 40) derart verschränkt angeordnet und gestapelt sind, dass zumindest ein Teil der Module ein dreidimensionales Gitter bilden.

6. Modulare Anlage nach einem der vorangegangenen Ansprüche, wobei die Lagerelemente (24, 24', 44, 44') der Module (20, 20a, 40) eine zentrale Öffnung (26, 46) aufweisen, so dass durch die Öffnungen entlang der durch jeweils zwei gepaarte Lagerelemente definierten Geraden ein Zugelement (62) durchführbar ist bzw. durchgeführt ist.

7. Modulare Anlage nach einem der vorangegangenen Ansprüche, wobei das Verbindungselement (64) ein Durchloch (68) aufweist, durch welches ein Zugelement (62) durchführbar ist bzw. durchgeführt ist.

8. Modulare Anlage nach einem der vorangegangenen Ansprüche, wobei die Module (20, 20a, 40) derart angeordnet sind, dass die Lagerelemente (24, 24', 44, 44') aller Module entlang einer Mehrzahl von zur Senkrechten (z) parallelen Geraden gefluchtet sind, und entlang jeder dieser Geraden ein Zugelement (62) durchführbar ist, bzw. ein Zugelement angeordnet ist.

9. Modulare Anlage nach einem der vorangegangenen Ansprüche, mit mindestens einer Spannvorrichtung (80) zum Aufrechterhalten der Zugspannung an einem Zugelement (62) bei Temperaturänderungen,
mit einer auf einem Modul der obersten Lage (11) oder der untersten Lage (12) der Anlage befestigten oder gelagerten Grundstruktur (81, 82, 87, 92), einem gegenüber der Grundstruktur entlang der Längsachse des Zugelements beweglichen Lager (94) und einem Federelement (90), das zwischen der Grundstruktur und dem beweglichen Lager angeordnet ist,
wobei ein erstes Ende (63) des Zugelementes auf dem beweglichen Lager der Spannvorrichtung aufliegt (84) oder mit diesem verbunden ist, ein zweites Ende des Zugelementes an einer entgegen gesetzten Seite der Anlage auf einem Gegenlager (70) aufliegt oder mit diesem verbunden ist. und
wobei das Verhältnis D1/D2 einer ersten Federkonstante D1 des Zugelements zu einer zweiten Federkonstanten D2 des Federelements mindestens 4/1 beträgt, bevorzugt mindestens 6/1, und besonders bevorzugt mindestens 9/1.

10. Montageset zum Aufbau einer modularen Anlage nach einem der vorangehenden Ansprüche, umfassend
mehrere Module (20, 20a, 40) mit einer Tragstruktur (78), wobei auf einer Oberseite (22, 42) der Tragstruktur drei oder mehr Lagerelemente (24', 44') angeordnet sind, die eine erste Ebene definieren; auf einer der Oberseite abgewandten Unterseite (21, 41) der Tragstruktur drei oder mehr Lagerelemente (24, 44) angeordnet sind, die eine zur ersten Ebene parallele zweite Ebene definieren; jeweils ein Lagerelement auf der Oberseite und ein Lagerelement auf der Unterseite ein Paar bilden und gefluchtet zueinander entlang einer zur Normalen der Ebenen parallelen Geraden angeordnet sind; und die genannten Lagerelemente eine konische Ausnehmung (25, 25' 45, 45') aufweisen;
mehrere Verbindungselemente (64), welche die Form eines Doppelkegels oder eines Doppelkegelstumpfs aufweisen; und
ein oder mehrere Zugelemente (62);
wobei die Kegelmantelflächen (66, 66') der Verbindungselemente (64) und die Kegelmantelflächen (25, 25') der Aufnahmen der Lagerelemente (24, 24') derart geformt sind, dass ein Kegel bzw. Kegelstumpf eines Verbindungselements bündig in der konischen Aufnahme eines Lagerelements aufliegen kann, ohne dass ein Teil des dazugehörigen Moduls auf einer Oberfläche des Verbindungelements aufliegt, die nicht zur Mantelfläche des genannten Kegels bzw. Kegelstumpfs gehört, insbesondere nicht auf einer zur Längsachse des Doppelkegels oder Doppelkegelstumpfs senkrechten Oberfläche des Verbindungelements.

11. Montageset nach Anspruch 10, wobei die Lagerelemente (24, 24', 44, 44') der Module (20, 20a, 40) eine zentrale Öffnung (26, 46) aufweisen, so dass durch die Öffnungen entlang der durch jeweils zwei gepaarte Lagerelemente definierten Geraden ein Zugelement (62) durchführbar ist.

12. Montageset nach Anspruch 10 oder 11, wobei die Verbindungselemente (64) ein Durchloch (68) aufweisen, durch welches ein Zugelement (62) durchführbar ist.

13. Montageset nach einem der Ansprüche 10 bis 12, mit mindestens einer Spannvorrichtung (80) zum Aufrechterhalten der Zugspannung an einem Zugelement (62) bei Temperaturänderungen, mit einer auf einem Modul befestigbaren oder lagerbaren Grundstruktur (81, 82, 87, 92), einem gegenüber der Grundstruktur beweglichen Lager (94) und einem Federelement (90), das zwischen der Grundstruktur und dem beweglichen Lager angeordnet ist, wobei ein erstes Ende (63) eines Zugelementes auf dem beweglichen Lager der Spannvorrichtung lagerbar (84) oder mit diesem verbindbar ist, und wobei das Verhältnis D1/D2 einer ersten Federkonstante D1 des Zugelements zu einer zweiten Federkonstanten D2 des Federelements mindestens 4/1 beträgt, bevorzugt mindestens 6/1, und besonders bevorzugt mindestens 9/1.

## Claims

1. A modular facility (1), in particular a modular industrial facility, with multiple cube-shaped facility modules (20, 20a, 40, 40a, 40b, 40c) that are arranged in two or more layers stacked one above the other; wherein
the modules have a support structure (78) having fastening points (24, 24', 44, 44'); the fastening points are provided for connecting a module to corresponding fastening points of the adjoining modules of a layer situated above and/or below same;
in the horizontal plane (x-y), the modules (20, 40) of one layer are connected (24, 24', 64, 44, 44') in a form-fit manner to the adjoining modules (40, 20) of the layer situated above and/or below same;
at least one tension device (62, 70, 80) having a tension element (62) is provided, via which a lowermost layer of modules (40a) or a foundation block (6) can be acted on with a tensile force along the vertical (z), with respect to an uppermost layer of modules (40c), so that the modules between the said lowermost layer and the said uppermost layer together with the adjoining modules (40, 20) of the layer situated above and/or below same are pressed together along the vertical (z) with a force fit at the fastening points, and are thus fixed in place;
three or more support elements (24', 44') that define a first plane are situated on a top side (22, 42) of the support structure (78) of the modules (20, 20a, 40), and three or more support elements (24, 44) that define a second plane that is parallel to the first plane are situated on a bottom side (21, 41) of the support structure facing away from the top side, the support elements being used as fastening points of the modules;
one support element on the top side and one support element on the bottom side in each case form a pair, and are aligned with one another along a straight line that is parallel to the normal of the planes; and
two mutually facing support elements (24, 24', 44, 44') of two adjoining modules (20, 20a, 40) of adjacent layers are connected by a connecting element (64); **characterized in that**
the said support elements (24, 24', 44, 44') have a conical seating (25, 25', 45, 45'); and
the connecting element (64) has the shape of a double cone or a double truncated cone, and in each case one cone or truncated cone of the connecting element is situated in the conical seating of one of the two support elements and rests on same in direct flush alignment.

2. The modular facility according to Claim 1, wherein the conical lateral surfaces (66, 66') of the connecting elements (64) and the conical lateral surfaces (25, 25') of the seatings of the support elements (24, 24') are shaped in such a way that a cone or truncated cone of a connecting element is able to rest in flush alignment in the conical seating of a support element without a portion of the associated module resting on a surface of the connecting element that is not part of the lateral surface of the said cone or truncated cone, in particular not on a surface of the connecting element that is perpendicular to the longitudinal axis of the double cone or double truncated cone.

3. The modular facility according to one the preceding claims, wherein layers having a support module (40, 40a, 40b, 40c, 6) and layers having one or more functional modules (20, 20', 20", 20a) are arranged of one above the other in alternation.

4. The modular facility according to one of the preceding claims, wherein the modules (20, 20a, 40) are arranged in such a way that for at least one layer of modules, the fastening points of two or more modules of the said layer are connected to fastening points of a common module of a layer situated above and/or below same.

5. The modular facility according to one of the preceding claims, wherein the modules (20, 20a, 40) are interlocked and stacked in such a way that at least a portion of the modules form a three-dimensional lattice.

6. The modular facility according to one of the preceding claims, wherein the support elements (24, 24', 44, 44') of the modules (20, 20a, 40) have a central opening (26, 46), so that a tension element (62) is led or may be led through the openings along the straight line that is defined by two paired support elements in each case.

7. The modular facility according to one of the preceding claims, wherein the connecting element (64) has a through hole (68) through which a tension element (62) is led or may be led.

8. The modular facility according to one of the preceding claims, wherein the modules (20, 20a, 40) are arranged in such a way that the support elements (24, 24', 44, 44') of all modules are in alignment along a plurality of straight lines that are parallel to the vertical (z), and a tension element (62) may be led through, or a tension element is situated, along each of these straight lines.

9. The modular facility according to one of the preceding claims, having at least one tensioning device (80) for maintaining the tensile stress on a tension element (62) during changes in temperature,
having a basic structure (81, 82, 87, 92) that is fastened to or supported on a module of the uppermost layer (11) or of the lowermost layer (12) of the facility, a support (94) that is movable with respect to the basic structure along the longitudinal axis of the tension element, and a spring element (90) that is situated between the basic structure and the movable support,
wherein a first end (63) of the tension element rests (84) on the movable support of the tensioning device or is connected thereto, a second end of the tension element rests on an opposite side of the facility on a counterbearing (70) or is connected thereto, and
wherein the ratio D1/D2 of a first spring constant D1 of the tension element to a second spring constant D2 of the spring element is at least 4/1, preferably at least 6/1, and particularly preferably at least 9/1.

10. An assembly set for constructing a modular facility according to one of the preceding claims, comprising
multiple modules (20, 20a, 40) having a support structure (78), wherein three or more support elements (24', 44') that define a first plane are situated on a top side (22, 42) of the support structure; three or more support elements (24, 44) that define a second plane that is parallel to the first plane are situated on a bottom side (21, 41) of the support structure facing away from the top side; one support element on the top side and one support element on the bottom side in each case form a pair and are aligned with one another along a straight line that is parallel to the normal of the planes; and the said support elements have a conical seating (25, 25' 45, 45');
multiple connecting elements (64) that have the shape of a double cone or a double truncated cone; and
one or more tension elements (62);
wherein the conical lateral surfaces (66, 66') of the connecting elements (64) and the conical lateral surfaces (25, 25') of the seatings of the support elements (24, 24') are shaped in such a way that a cone or truncated cone of a connecting element is able to rest in flush alignment in the conical seating of a support element without a portion of the associated module resting on a surface of the connecting element that is not part of the lateral surface of the said cone or truncated cone, in particular not on a surface of the connecting element that is perpendicular to the longitudinal axis of the double cone or double truncated cone.

11. The assembly set according to Claim 10, wherein the support elements (24, 24', 44, 44') of the modules have a central opening (26, 46), so that a tension element (62) may be led through the openings along the straight line that is defined by two paired support elements in each case.

12. The assembly set according to Claim 10 or 11, wherein the connecting elements (64) have a through hole (68) through which a tension element may be led (62).

13. The assembly set according to one of Claims 10 to 12, having at least one tensioning device (80) for maintaining the tensile stress on a tension element (62) during changes in temperature, having a basic structure (81, 82, 87, 92) that may be fastened to or supported on a module, a support (94) that is movable with respect to the basic structure, and a spring element (90) that is situated between the basic structure and the movable support, wherein a first end (63) of a tension element is supportable (84) on the movable support of the tensioning device or is connectable thereto, and the ratio D1/D2 of a first spring constant D1 of the tension element to a second spring constant D2 of the spring element is at least 4/1, preferably at least 6/1, and particularly preferably at least 9/1.

## Revendications

1. Installation modulaire (1), en particulier une installation industrielle modulaire, comprenant une pluralité de modules d'installation parallélépipédique (20, 20a, 40, 40a, 40b, 40c) qui sont disposés en au moins deux couches empilées l'une sur l'autre ;
les modules ayant une structure porteuse (78) pourvue de points de fixation (24, 24', 44, 44') ;
les points de fixation étant prévus pour relier un module aux points de fixation correspondants des modules adjacents d'une couche sus-jacente et/ou sous-jacente ;
les modules (20, 40) d'une couche étant reliés (24, 24', 64, 44, 44') aux modules adjacents (40, 20) de la couche sus-jacente et/ou sous-jacente par complémentarité de formes dans le plan horizontale (x-y) ;
au moins un dispositif à force de traction (62, 70, 80) comportant un élément de traction (62) étant prévu qui permet de soumettre, le long de la perpendiculaire (z), une couche la plus basse de modules (40a) ou un bloc d'assise (6) par rapport à une couche la plus haute de modules (40c) à une force de traction de manière à presser en force les uns contre les autres, et donc à fixer, les modules situés entre ladite couche la plus basse et ladite couche la plus haute avec les modules adjacents (40, 20) de la couche sus-jacente et/ou sus-jacente le long de la perpendiculaire (z) aux points de fixation ;
au moins trois éléments d'appui (24', 44'), qui définissent un premier plan, étant disposés sur un côté supérieur (22, 42) de la structure porteuse (78) des modules (20, 20a, 40) et au moins trois éléments d'appui (24, 44), qui définissent un deuxième plan parallèle au premier plan, étant disposés sur un côté inférieur (21, 41) de la structure porteuse opposé au côté supérieur, les éléments d'appui servant de points de fixation des modules ;
un élément d'appui du côté supérieur et un élément d'appui du côté inférieur formant à chaque fois une paire et étant disposés de manière alignée l'un à l'autre le long d'une ligne droite parallèle à la normale des plans ; et
deux éléments d'appui (24, 24', 44, 44'), dirigés l'un vers l'autre, de deux modules adjacents (20, 20a, 40) de couches voisines étant reliés par un élément de liaison (64) ;
**caractérisé en ce que**
lesdits éléments d'appui (24, 24', 44, 44') comporte un évidement conique (25, 25', 45, 45') ; et
l'élément de liaison (64) a la forme d'un double cône ou d'un double cône tronqué, et chaque cône ou cône tronqué de l'élément de liaison est disposé dans le logement conique de l'un des deux éléments d'appui et vient en appui sur celui-ci directement à fleur.

2. Installation modulaire selon la revendication 1, les surfaces latérales coniques (66, 66') des éléments de liaison (64) et les surfaces latérales coniques (25, 25') des logements des éléments d'appui (24, 24') étant formées de manière à ce qu'un cône ou un cône tronqué d'un élément de liaison puisse venir en appui à fleur dans le logement conique d'un élément d'appui sans qu'une partie du module associé vienne en appui sur une surface de l'élément de liaison qui ne fait pas partie de la surface latérale dudit cône ou dudit cône tronqué, en particulier d'une surface de l'élément de liaison qui est perpendiculaire à l'axe longitudinal du double cône ou du double cône tronqué.

3. Installation modulaire selon l'une des revendications précédentes, des couches comportant un module de support (40, 40a, 40b, 40c, 6) et des couches comportant au moins un module fonctionnel (20, 20', 20", 20a) étant disposés les unes sur les autres en alternance.

4. Installation modulaire selon l'une des revendications précédentes, les modules (20, 20a, 40) étant disposés de manière à ce que, pour au moins une couche de modules, les points de fixation d'au moins deux modules de ladite couche soient reliés aux points de fixation d'un module commun d'une couche sus-jacente et/ou sous-jacente.

5. Installation modulaire selon l'une des revendications précédentes, les modules (20, 20a, 40) étant disposés de manière entrelacée et empilés de manière à ce qu'au moins une partie des modules forme un réseau tridimensionnel.

6. Installation modulaire selon l'une des revendications précédentes, les éléments d'appui (24, 24', 44, 44') des modules (20, 20a, 40) comportant une ouverture centrale (26, 46) de sorte qu'un élément de traction (62) soit guidé ou puisse être guidé à travers les ouvertures le long des lignes droites définies chacune par deux éléments d'appui appariés.

7. Installation modulaire selon l'une des revendications précédentes, l'élément de liaison (64) comportant un trou traversant (68) à travers lequel un élément de traction (62) est guidé ou peut être guidé.

8. Installation modulaire selon l'une des revendications précédentes, les modules (20, 20a, 40) étant disposés de telle sorte que les éléments d'appui (24, 24', 44, 44') de tous les modules soient alignés suivant une pluralité de lignes droites parallèles à la perpendiculaire (z) et un élément de traction (62) puisse être guidé ou un élément de traction soit disposé, le long de chacune de ces lignes droites.

9. Installation modulaire selon l'une des revendications précédentes, comprenant au moins un dispositif de serrage (80) destiné à maintenir la contrainte de traction sur un élément de traction (62) en cas de variations de température,
avec une structure de base (81, 82, 87, 92) pouvant être fixée ou montée sur un module de la couche la plus haute (11) ou de la couche la plus basse (12) de l'installation, un support (94) pouvant être déplacé par rapport à la structure de base le long de l'axe longitudinal de l'élément de traction, et un élément à ressort (90) disposé entre la structure de base et le support mobile,
une première extrémité (63) de l'élément de traction venant en appui (84) sur le support mobile du dispositif de serrage ou étant reliée à celui-ci, une deuxième extrémité de l'élément de traction venant appui sur un contre-support (70), ou étant relié à celui-ci, sur un côté opposé de l'installation et
le rapport D1/D2 d'une première constante de ressort D1 de l'élément de traction à une deuxième constante de ressort D2 de l'élément à ressort étant d'au moins 4/1, de préférence d'au moins 6/1 et de manière particulièrement préférée d'au moins 9/1.

10. Ensemble de montage destiné à la construction d'une installation modulaire selon l'une des revendications précédentes, comprenant
une pluralité de modules (20, 20a, 40) comportant une structure porteuse (78), au moins trois éléments d'appui (24', 44'), qui définissent un premier plan étant disposés sur un côté supérieur (22, 42) de la structure porteuse ; au moins trois éléments d'appui (24, 44), qui définissent un deuxième plan parallèle au premier plan, étant disposés sur un côté inférieur (21, 41) de la structure porteuse qui est opposé au côté supérieur ; un élément d'appui du côté supérieur et un élément d'appui du côté inférieur formant chacun une paire et étant disposés de manière alignée les uns avec les autres le long d'une ligne droite parallèle à la normale des plans ; et lesdits éléments d'appui comportant un évidement conique (25, 25'45, 45') ;
une pluralité d'éléments de liaison (64) ayant la forme d'un double cône ou d'un double cône tronqué ; et
au moins un élément de traction (62) ;
les surfaces de cône latérales (66, 66') des éléments de liaison (64) et les surfaces de cône latérales (25, 25') des logements des éléments d'appui (24, 24') étant formées de manière à ce qu'un cône ou un cône tronqué d'un élément de liaison puisse venir en appui à fleur dans le logement conique d'un élément d'appui sans qu'une partie du module associé repose vienne en appui sur une surface de l'élément de liaison qui ne fait pas partie de la surface latérale dudit cône ou dudit cône tronqué, en particulier d'une surface de l'élément de liaison qui est perpendiculaire à l'axe longitudinal du double cône ou du double cône tronqué.

11. Ensemble de montage selon la revendication 10, les éléments d'appui (24, 24', 44, 44') des modules comportant une ouverture centrale (26, 46) de sorte qu'un élément de traction (62) soit guidé ou puisse être guidé à travers les ouvertures le long des lignes droites définies chacune par deux éléments d'appui appariés.

12. Ensemble de montage selon la revendication 10 ou 11, les éléments de liaison (64) comportant un trou traversant (68) à travers lequel un élément de traction (62) peut être guidé.

13. Ensemble de montage selon l'une des revendications 10 à 12, comprenant au moins un dispositif de serrage (80) destiné à maintenir la contrainte de traction sur un élément de traction (62) en cas de variations de température, avec une structure de base (81, 82, 87, 92) pouvant être fixée ou montée sur un module, un support (94) pouvant être déplacé par rapport à la structure de base et un élément à ressort (90) disposé entre la structure de base et le support mobile, une première extrémité (63) de l'élément de traction pouvant venir en appui (84) sur le support mobile du dispositif de serrage ou pouvant être reliée à celui-ci, et le rapport D1/D2 d'une première constante de ressort D1 de l'élément de traction à une deuxième constante de ressort D2 de l'élément à ressort étant d'au moins 4/1, de préférence d'au moins 6/1 et de manière particulièrement préférée d'au moins 9/1.
